# EUROPEAN PATENT APPLICATION

(11) **EP 4 192 104 A1**
(43) Date of publication of application: **07.06.2023**
(21) Application number: 21857522.3
(22) Date of filing: 09.08.2021
(51) Int. Cl.: H04W 36/00

(54) **MOBILITY MANAGEMENT METHOD AND APPARATUS**

(30) Priority: 18.08.2020 CN 202010830207
(71) Applicant: Huawei Technologies Co., Ltd., Longgang Shenzhen, Guangdong 518129 (CN)
(72) Inventor: CAO, Longyu, Shenzhen, Guangdong 518129 (CN); YU, Yijun, Shenzhen, Guangdong 518129 (CN)
(74) Representative: Huawei European IPR
(86) International application number: PCT/CN2021/111387
(87) International publication number: WO 2022/037427

(57) **Abstract**

This application provides a mobility management method. The method includes: A first network device receives a first message, where the first message includes information that indicates a target cell. The first network device determines, based on at least one of the following information, whether a terminal device is allowed to access the target cell: context information of the terminal device and resource status information of the target cell. It is determined, by using resource status information of a plurality of cells and/or the context information of the terminal device, whether the terminal device is allowed to access a cell, so that determining can be performed before the terminal device accesses the target cell, to improve an access success rate, avoid a resource waste, and implement centralized control on the plurality of cells.

## Description

This application claims priority to Chinese Patent Application No. 202010830207.7, filed with the China National Intellectual Property Administration on August 18, 2020 and entitled "MOBILITY MANAGEMENT METHOD AND APPARATUS", which is incorporated herein by reference in its entirety.

### TECHNICAL FIELD

This application relates to the communications field, and more specifically, to a mobility management method and apparatus.

### BACKGROUND

With the development of wireless network technologies, automation and intelligence have been regarded as an important direction of future development of a wireless network. The industry has researched and explored the intelligence of the wireless network, including reconstruction of a RAN network based on an artificial intelligence/machine learning (artificial intelligence/machine learning, AI/ML) technology, and opening of a wireless network interface and function, to implement the automation and the intelligence of the wireless network.

Currently, in a 5G RAN network architecture, a gNB-CU-CP may implement functions of a radio resource control (radio resource control, RRC) protocol and a packet data convergence protocol-control plane (packet data convergence protocol-control plane, PDCP-C) protocol. Main functions of an RRC protocol layer include functions such as mobility management (mobility management) and access control (access control).

Radio resource management (radio resource management, RRM) functions mainly include radio admission control (radio admission control), connection mobility management (connection mobility control), and the like. Currently, main RRM functions (including access control, mobility management, and the like) are all performed by the gNB-CU-CP.

However, because the gNB-CU-CP cannot sense status information of available resources of a gNB-DU and a gNB-CU-UP, in a mobility management process, an operation of allocating a resource to UE in a target cell (for example, by a target-gNB-CU-UP and a target-gNB-DU) may fail due to resource limitation, and consequently, the UE fails to perform access or fails to be handed over. Currently, no good solution is provided to resolve the foregoing problems.

### SUMMARY

This application provides a mobility management method. It is determined, by using resource status information of a plurality of cells and context information of a terminal device, whether the terminal device is allowed to access a cell, so that determining can be performed before the terminal device accesses a target cell, to improve an access success rate, avoid a resource waste, and implement centralized control on the plurality of cells.

According to a first aspect, a mobility management method is provided. The method includes: A first network device receives a first message, where the first message includes information that indicates a target cell. The first network device determines, based on at least one of the following information, whether a terminal device is allowed to access the target cell: context information of the terminal device and resource status information of the target cell.

It is determined, based on the context information of the terminal device and the resource status information of the target cell, whether the terminal device is allowed to access a cell, so that determining can be performed before the terminal device accesses the target cell, to improve an access success rate and avoid a resource waste.

Optionally, the first network device may be a radio access intelligent controller in a radio access network architecture.

Optionally, functions of the radio access intelligent controller may include functions such as handover decision and access control decision.

With reference to the first aspect, in some implementations of the first aspect, the first message includes a measurement report of the terminal device, or the first message includes an identifier of the target cell.

By receiving the measurement report of the terminal device or the identifier of the target cell, the first network device may determine whether access of the terminal device is allowed. Optionally, when the target cell does not belong to a radio access intelligent controller of a cell currently serving the terminal device, the radio access intelligent controller may send the identifier of the target cell to the first network device after making the handover decision and determining the target cell. In this way, the first network device can implement service switching between different radio access intelligent controllers. In addition, signaling exchange between RAN network elements and between a RAN network element and a core-network network element can be reduced, to reduce a resource waste.

With reference to the first aspect, in some implementations of the first aspect, the method further includes: The first network device sends a second message, where the second message is used to initiate a handover procedure to the target cell.

After determining that access to the target cell is allowed, the first network device may send a message to request to perform handover to the target cell.

It should be understood that the second message sent by the first network device is used to initiate the handover procedure to the target cell, instead of sending the second message to the target cell. Optionally, the second message herein may be sent to a base station or a network device that serves the target cell, or may be sent to a base station or a network device that serves another cell. After receiving the second message, the base station or the network device that serves the target cell or the another cell may initiate the handover procedure between the terminal device and the target cell.

With reference to the first aspect, in some implementations of the first aspect, when the first message includes the measurement report of the terminal device, the method further includes: The first network device determines the target cell based on the measurement report of the terminal device.

The first network device may determine, based on information in the received measurement report, whether to perform the handover, and further determine the target cell.

With reference to the first aspect, in some implementations of the first aspect, that the first network device sends a second message, where the second message is used to initiate a handover procedure to the target cell includes: The first network device sends the second message to a second network device, where the second network device is a wireless network device that serves the target cell. Optionally, the wireless network device may be a RAN functional network element device, for example, a gNB (gNodeB), a central unit-control plane (central unit-control plane, CU-CP), a central unit-user plane (central unit-user plane, CU-UP), or a distributed unit (distributed unit, DU).

Optionally, after determining to access the target cell, the first network device may directly send a handover request to the wireless network device that serves the target cell. Before sending the request, the first network device has already performed determining based on a resource status of the wireless network device or the context information of the terminal device. Therefore, it can be ensured that the handover procedure is successfully completed in the target cell, to improve a handover success rate and reduce a resource waste.

With reference to the first aspect, in some implementations of the first aspect, the method further includes: The first network device sends a third message to a third network device, where the third message includes information about handover of the terminal device to the target cell, the third network device is a network device that serves a source cell, and the source cell is a cell to which the terminal device is connected before the handover procedure occurs.

With reference to the first aspect, in some implementations of the first aspect, that the first network device sends a second message, where the second message is used to initiate a handover procedure to the target cell includes: The first network device sends the second message to a fourth network device, where the fourth network device is a wireless network device that serves a source cell, and the source cell is a cell to which the terminal device is connected before the handover procedure occurs.

Optionally, after determining to access the target cell, the first network device may send information about the determined target cell to the source cell serving the terminal device, so that the source cell may initiate the handover procedure to the target cell based on the information about the target cell. Because the first network device has performed determining based on the resource status of the wireless network device or the context information of the terminal device before sending the message, it can be ensured that the handover procedure is successfully completed in the target cell, to improve a handover success rate and reduce a resource waste.

With reference to the first aspect, in some implementations of the first aspect, the method further includes: The first network device sends a fourth message, where the fourth message is used to request to obtain the context information of the terminal device. The first network device receives the context information of the terminal device.

Optionally, when the first network device does not locally store the context information of the terminal device, the first network device may send a request to the network device that serves the source cell, to request to obtain the context information of the terminal device, so that the first network device may further determine, based on the context information of the terminal device, whether the terminal device is allowed to access the target cell, to improve a handover success rate and reduce a resource waste.

With reference to the first aspect, in some implementations of the first aspect, the method further includes: The first network device receives a fifth message, where the fifth message is used by the first network device to update the context information of the terminal device.

Optionally, the first network device may receive updated context information of the terminal device after the cell handover, for example, an RRC configuration and routing information that are obtained after the handover, so that the first network device can determine, based on the latest context information, whether the terminal device is allowed to access the target cell, to improve a handover success rate, and reduce a resource waste.

With reference to the first aspect, in some implementations of the first aspect, that the first network device determines, based on at least one of the following information, whether a terminal device is allowed to access the target cell further includes: The first network device determines, according to an access control policy, whether the terminal device is allowed to access the target cell.

Optionally, in addition to the context information of the terminal device and the resource status information of the target cell, the first network device may further determine, according to the access control policy, whether the terminal device is allowed to access the target cell, to improve a handover success rate and reduce a resource waste.

With reference to the first aspect, in some implementations of the first aspect, the method further includes: The first network device receives a sixth message, where the sixth message includes the access control AC policy.

The access control policy is received, so that the first network device can further determine, according to the access control policy, whether the terminal device is allowed to access the cell, to improve a handover success rate and reduce a resource waste.

According to a second aspect, a mobility management method is provided. The method includes: A second network device receives a first message, where the first message includes a measurement report of a terminal device. The second network device determines, based on the first message, a target cell to be accessed by the terminal device. The second network device determines that the target cell exceeds a service range of the second network device. The second network device sends a second message to a first network device, where the second message includes an identifier of the target cell, and a service range of the first network device covers the target cell.

Optionally, the second network device may be a radio access intelligent controller that manages a source cell that provides a service for the terminal device. In this case, the second network device may send a message including information about the target cell to a radio access intelligent controller that manages the target cell.

In a handover process, if the second network device finds that the target cell exceeds the service range of the second network device, the second network device may determine, based on locally configured information, the radio access intelligent controller corresponding to the target cell, and send the information about the target cell to the radio access intelligent controller, so that the radio access intelligent controller may further initiate a handover procedure to the target cell, to implement a service handover process across radio access intelligent controllers, improve a handover success rate, and reduce a resource waste.

With reference to the second aspect, in some implementations of the second aspect, the method further includes: The second network device receives a third message, where the third message includes information about handover of the terminal device to the target cell. The second network device sends a fourth message, where the fourth message includes the information about the handover of the terminal device to the target cell.

According to a third aspect, a mobility management method is provided. The method includes: A third network device sends a first message, where the first message includes a measurement report of a terminal device. The third network device receives a second message, where the second message includes an identifier of a target cell, and the target cell is a cell to be accessed by the terminal device. The third network device sends a third message, where the third message is used to initiate a handover procedure to the target cell.

According to a fourth aspect, a mobility management method is provided. The method includes: A fourth network device receives a first message, where the first message includes information that indicates a target cell. The fourth network device determines, according to an access control policy, whether a terminal device is allowed to access the target cell.

Optionally, the fourth network device may be a radio access intelligent controller whose service range covers the target cell.

Before the terminal device accesses the target cell, the fourth network device may perform centralized determining according to the access control policy, to avoid a large quantity of access control processes between the terminal device and the target cell, so that signaling exchange between network elements in a wireless network can be reduced, a resource waste is reduced, and a centralized control capability of a network is improved.

With reference to the fourth aspect, in some implementations of the fourth aspect, the first message is used to request to obtain context information of the terminal device, and the method further includes: The fourth network device sends a second message, where the second message includes the context information of the terminal device.

Optionally, when the terminal device is in an inactive (inactive) state and intends to be restored to a connected (connected) state, a network element of the target cell needs to restore the context information of the terminal device. In this application, the fourth network device may perform access control on the terminal device. After determining that the terminal device is allowed to access the target cell, the fourth network device sends the context information of the terminal device to the network element of the target cell, so that a network device in the target cell does not send a request to a network device that is in a cell previously serving the terminal device, to obtain the context information. According to the method in this application, UE-related information on the network element in the target cell can be restored based on the context information locally stored by the fourth network device, to reduce signaling exchange between network elements, and reduce a resource waste.

With reference to the fourth aspect, in some implementations of the fourth aspect, the method further includes: The fourth network device receives a third message, where the third message is used by the fourth network device to update the context information of the terminal device.

Optionally, the fourth network device may receive updated context information of the UE, so as to perform access control on the terminal device more accurately based on the updated context information.

With reference to the fourth aspect, in some implementations of the fourth aspect, the first message is used to request to access the target cell.

Optionally, when the terminal device initially accesses a network, the fourth network device may determine, according to the access control policy, that the terminal device is allowed to access the target cell. According to the method in this application, centralized determining may be performed according to the access control policy, to avoid a large quantity of access control processes between the terminal device and the target cell, so that signaling exchange between network elements in a wireless network can be reduced, a resource waste is reduced, and a centralized control capability of a network is improved.

With reference to the fourth aspect, in some implementations of the fourth aspect, the method further includes: The fourth network device sends a fourth message, where the fourth message indicates the network device in the target cell to report an access request to the fourth network device when receiving the access request.

The network device in the target cell is indicated to report the access request to the fourth network device when receiving the access request, so that the fourth network device can perform centralized control on a cell within the service range of the fourth network device. Therefore, signaling exchange between network elements in a wireless network can be reduced, a resource waste is reduced, and a centralized control capability of a network is improved.

With reference to the fourth aspect, in some implementations of the fourth aspect, the method further includes: The fourth network device sends a fifth message, where the fifth message includes information indicating that the terminal device is allowed to access the target cell.

After determining that the terminal device is allowed to access the target cell, the fourth network device may send a message to the target cell, to indicate that the access between the target cell and the terminal device is completed.

With reference to the fourth aspect, in some implementations of the fourth aspect, the method further includes: The fourth network device receives a sixth message, where the sixth message includes the access control AC policy.

The access control policy is received, so that the fourth network device can perform an access control process according to the access control policy. Compared with a 5G RAN, an access control function of the 5G RAN can be decoupled from a CP, to implement centralized control of an open radio access network.

According to a fifth aspect, a mobility management apparatus is provided. The apparatus includes: a first receiving module, configured to receive a first message, where the first message includes information that indicates a target cell; and a first processing module, configured to determine, based on at least one of the following information, whether a terminal device is allowed to access the target cell: context information of the terminal device and resource status information of the target cell.

With reference to the fifth aspect, in some implementations of the fifth aspect, the first message includes a measurement report of the terminal device, or the first message includes an identifier of the target cell.

With reference to the fifth aspect, in some implementations of the fifth aspect, the apparatus further includes a first sending module, configured to send a second message, where the second message is used to initiate a handover procedure to the target cell.

With reference to the fifth aspect, in some implementations of the fifth aspect, when the first message includes the measurement report of the terminal device, the first processing module is further configured to determine the target cell based on the measurement report of the terminal device.

With reference to the fifth aspect, in some implementations of the fifth aspect, the first sending module is specifically configured to send the second message to a second network device, where the second network device is a network device that serves the target cell.

With reference to the fifth aspect, in some implementations of the fifth aspect, the first sending module is further configured to send a third message to a third network device, where the third message includes information about handover of the terminal device to the target cell, the third network device is a network device that serves a source cell, and the source cell is a cell to which the terminal device is connected before the handover procedure occurs.

With reference to the fifth aspect, in some implementations of the fifth aspect, the first sending module is specifically configured to send the second message to a fourth network device, where the fourth network device is a network device that serves a source cell, and the source cell is a cell to which the terminal device is connected before the handover procedure occurs.

With reference to the fifth aspect, in some implementations of the fifth aspect, the first sending module is further configured to send a fourth message, where the fourth message is used to request to obtain the context information of the terminal device, and the first receiving module is further configured to receive the context information of the terminal device.

With reference to the fifth aspect, in some implementations of the fifth aspect, the first receiving module is further configured to receive a fifth message, where the fifth message is used by the apparatus to update the context information of the terminal device.

With reference to the fifth aspect, in some implementations of the fifth aspect, the first processing module is further configured to determine, according to an access control policy, whether the terminal device is allowed to access the target cell.

With reference to the fifth aspect, in some implementations of the fifth aspect, the first receiving module is further configured to receive a sixth message, where the sixth message includes the access control AC policy.

According to a sixth aspect, a mobility management apparatus is provided. The apparatus includes: a second receiving module, configured to receive a first message, where the first message includes a measurement report of a terminal device; a second processing module, configured to determine, based on the first message, a target cell to be accessed by the terminal device, where the second processing module is further configured to determine that the target cell exceeds a service range of a second network device; and a second sending module, configured to send a second message to a first network device, where the second message includes an identifier of the target cell, and a service range of the first network device covers the target cell.

With reference to the sixth aspect, in some implementations of the sixth aspect, the second receiving module is further configured to receive a third message, where the third message includes information about handover of the terminal device to the target cell; and the second sending module is further configured to send a fourth message, where the fourth message includes the information about the handover of the terminal device to the target cell.

According to a seventh aspect, a mobility management apparatus is provided. The apparatus includes: a third sending module, configured to send a first message, where the first message includes a measurement report of a terminal device; and a third receiving module, configured to receive a second message, where the second message includes an identifier of a target cell, and the target cell is a cell to be accessed by the terminal device. The third sending module is further configured to send a third message, where the third message is used to initiate a handover procedure to the target cell.

According to an eighth aspect, a mobility management apparatus is provided. The apparatus includes: a fourth receiving module, configured to receive a first message, where the first message includes information that indicates a target cell; and a fourth processing module, configured to determine, according to an access control policy, whether a terminal device is allowed to access the target cell.

With reference to the eighth aspect, in some implementations of the eighth aspect, the first message is used to request to obtain context information of the terminal device, and the apparatus further includes: a fourth sending module, configured to send a second message, where the second message includes the context information of the terminal device.

With reference to the eighth aspect, in some implementations of the eighth aspect, the fourth receiving module is further configured to receive a third message, where the third message is used by the apparatus to update the context information of the terminal device.

With reference to the eighth aspect, in some implementations of the eighth aspect, the first message is used to request to access the target cell.

With reference to the eighth aspect, in some implementations of the eighth aspect, the apparatus further includes a fifth sending module, configured to send a fourth message, where the fourth message indicates a network device in the target cell to report an access request to the apparatus when receiving the access request.

With reference to the eighth aspect, in some implementations of the eighth aspect, the fourth sending module or the fifth sending module is further configured to send a fifth message, where the fifth message includes information indicating that the terminal device is allowed to access the target cell.

With reference to the eighth aspect, in some implementations of the eighth aspect, the fourth receiving module is further configured to receive a sixth message, where the sixth message includes the access control AC policy.

According to a ninth aspect, a communication apparatus is provided. The communication apparatus has a function of implementing the method according to the foregoing aspects. The function may be implemented by hardware, or may be implemented by executing corresponding software by hardware. The hardware or the software includes one or more modules corresponding to the function.

According to a tenth aspect, a communication apparatus is provided, and includes a processor. The processor is coupled to a memory, and is configured to invoke a computer program from the memory and run the computer program, to perform the method according to any one of the foregoing aspects or the possible implementations of the foregoing aspects.

According to an eleventh aspect, a communication apparatus is provided, and includes a processor and a memory. The memory is configured to store a computer program, and the processor is configured to invoke the computer program from the memory and run the computer program, so that the communication device performs the method according to any one of the foregoing aspects or the possible implementations of the foregoing aspects.

According to a twelfth aspect, an apparatus (where for example, the apparatus may be a chip system) is provided. The apparatus includes a processor, configured to support the communication apparatus in implementing functions in the foregoing aspects. In a possible design, the apparatus further includes a memory, and the memory is configured to store program instructions and data that are necessary for the communication apparatus. When the apparatus is the chip system, the apparatus may include a chip, or may include a chip and another discrete component.

According to a thirteenth aspect, a computer-readable storage medium is provided, and is configured to store a computer program. The computer program includes instructions for performing the method according to any one of the foregoing aspects or the possible implementations of the foregoing aspects.

According to a fourteenth aspect, a computer program product is provided, and includes a computer program. When the computer program is run on a computer device, the computer device is enabled to perform the method according to the foregoing aspects.

According to a fifteenth aspect, a communication system is provided. The communication system includes a first network device, a second network device, a third network device, and a fourth network device. The first network device is configured to perform steps performed by the first network device in the first aspect or the solutions provided in embodiments of this application. The second network device is configured to perform steps performed by the second network device in the second aspect or the solutions provided in embodiments of this application. The third network device is configured to perform steps performed by the third network device in the third aspect or the solutions provided in embodiments of this application. The fourth network device is configured to perform steps performed by the fourth network device in the fourth aspect or the solutions provided in embodiments of this application.

These aspects or other aspects of this application are more concise and easier to understand in descriptions of the following embodiments.

### BRIEF DESCRIPTION OF DRAWINGS

FIG. 1 is a schematic diagram of a system architecture of a new RAN;
FIG. 2 is a schematic diagram of a protocol function in a 5G RAN system architecture;
FIG. 3 is a schematic diagram of an RRM function in a 5G RAN system architecture;
FIG. 4A and FIG. 4B are a schematic flowchart of UE handover;
FIG. 5 is a schematic diagram of a mobility management method according to an embodiment of this application;
FIG. 6 is a schematic diagram of another mobility management method according to an embodiment of this application;
FIG. 7 is a schematic diagram of another mobility management method according to an embodiment of this application;
FIG. 8 is a schematic diagram of another mobility management method according to an embodiment of this application;
FIG. 9A and FIG. 9B are a schematic flowchart of UE handover according to an embodiment of this application;
FIG. 10A and FIG. 10B are a schematic flowchart of another UE handover according to an embodiment of this application;
FIG. 11A, FIG. 11B, and FIG. 11C are a schematic flowchart of another UE handover according to an embodiment of this application;
FIG. 12A and FIG. 12B are a schematic flowchart of switching UE from an inactive state to a connected state according to an embodiment of this application;
FIG. 13 is a schematic flowchart of initially accessing a network by UE according to an embodiment of this application;
FIG. 14 is a schematic diagram of a mobility management apparatus according to an embodiment of this application;
FIG. 15 is a schematic diagram of another mobility management apparatus according to an embodiment of this application;
FIG. 16 is a schematic diagram of another mobility management apparatus according to an embodiment of this application;
FIG. 17 is a schematic diagram of another mobility management apparatus according to an embodiment of this application;
FIG. 18 is a schematic diagram of another structure of a mobility management apparatus according to an embodiment of this application;
FIG. 19 is a schematic diagram of another structure of a mobility management apparatus according to an embodiment of this application;
FIG. 20 is a schematic diagram of another structure of a mobility management apparatus according to an embodiment of this application; and
FIG. 21 is a schematic diagram of another structure of a mobility management apparatus according to an embodiment of this application.

### DESCRIPTION OF EMBODIMENTS

The following describes technical solutions of this application with reference to accompanying drawings.

The technical solutions in embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, and a future evolved communication system.

A terminal device in embodiments of this application is a device having a wireless transceiver function, and the terminal device may be deployed on the land, including an indoor or outdoor device, a handheld device, or a vehicle-mounted device, may be deployed on the water (for example, on a ship), or may be deployed in the air (for example, on a plane, a balloon, or a satellite). The terminal device may communicate with a core network through a radio access network (radio access network, RAN), and exchange voice and/or data with the RAN. The terminal device may be a mobile phone (mobile phone), a tablet computer (Pad), a computer with a wireless transceiver function, a mobile internet device (mobile internet device, MID), a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), or a wireless terminal in a smart home (smart home). An application scenario is not limited in embodiments of this application. The terminal device may also be sometimes referred to as user equipment (user equipment, UE), a mobile station, a remote station, or the like. A specific technology, a device form, and a name that are used by the terminal device are not limited in embodiments of this application.

In embodiments of this application, a network device may include an evolved NodeB (NodeB, eNB, or e-NodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario; or may include a next generation NodeB (next generation NodeB, gNB) in a 5th generation (5th generation, 5G) mobile communication technology new radio (new radio, NR) system; or may include a radio network controller (radio network controller, RNC), a NodeB (NodeB, NB), a base station controller (base station controller, BSC), a base transceiver station (base transceiver station, BTS), a transmission reception point (transmission reception point, TRP), a home base station (for example, a home evolved NodeB or a home NodeB, HNB), a baseband unit (base band unit, BBU), a baseband pool BBU pool, a Wi-Fi access point (access point, AP), or the like; or may include a central unit (central unit, CU) and a distributed unit (distributed unit, DU) in a cloud radio access network (cloud radio access network, Cloud RAN) system. This is not limited in embodiments of this application. In a split deployment scenario in which the access network device includes the CU and the DU, the CU supports protocols such as a radio resource control (radio resource control, RRC) protocol, a packet data convergence protocol (packet data convergence protocol, PDCP), and a service data adaptation protocol (service data adaptation protocol, SDAP), and the DU mainly supports a radio link control (radio link control, RLC) layer protocol, a media access control (media access control, MAC) layer protocol, and a physical layer protocol.

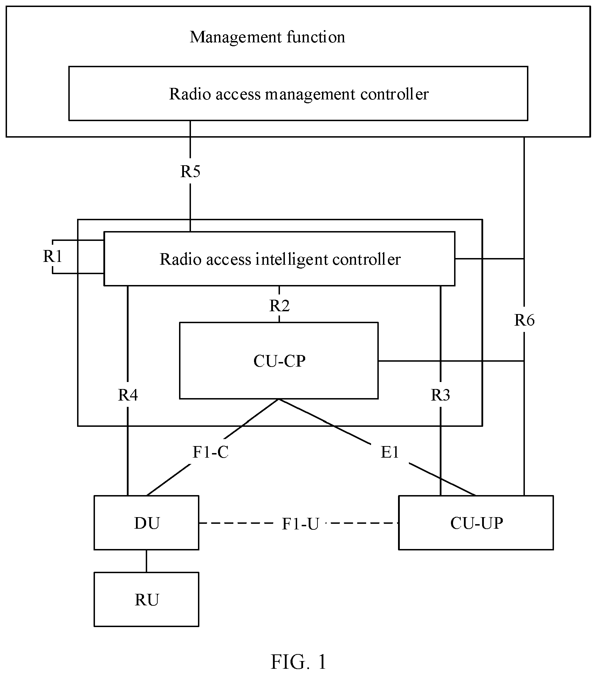

With the development of wireless network technologies, automation and intelligence have been regarded as an important direction of future development of a wireless network. The industry has researched and explored the intelligence of the wireless network, including reconstruction of a RAN network based on an artificial intelligence/machine learning (AI/ML) technology, and opening of a wireless network interface and function, to implement the automation and the intelligence of the wireless network. As shown in FIG. 1, an architecture of a new RAN includes functions of a radio access management controller, a radio access intelligent controller, a CU-CP, a CU-UP, a DU, and an RU. The radio access intelligent controller, CU-CP, CU-UP, DU, and RU may provide service functions of a control plane and a user plane of a wireless network. The radio access management controller and an operation, administration, and maintenance (operation, administration, and maintenance, OAM) may provide service functions of a management plane together. As a centralized control node of a control plane function of the new RAN, the radio access intelligent controller may implement automatic and intelligent management of radio network resources by using an AI/ML model.

Specifically, functions of main functional modules defined by the new RAN are described as follows.

The radio access management controller controls and optimizes a functional network element of the new RAN and latency-insensitive resources, executes an AI/ML workflow (including model training and update), and manages an application/a feature according to a policy.

The radio access intelligent controller controls and optimizes a functional network element (such as the CU-CP) of the new RAN and a resource based on data collection and operation instructions of an interface (such as R2, R3, or R4) between the radio access intelligent controller and the functional network element of the new RAN.

The CU-CP implements control plane functions of an RRC protocol and a PDCP protocol.

The CU-UP implements a user plane function of a PDCP protocol and a function of a SDAP protocol.

The DU implements a function of a RLC/MAC/High-PHY protocol.

The RU is a radio unit, and implements a function of a low-PHY protocol and an RF processing function based on bottom-layer splitting.

The OAM provides operation, maintenance, and management for a functional module in the new RAN.

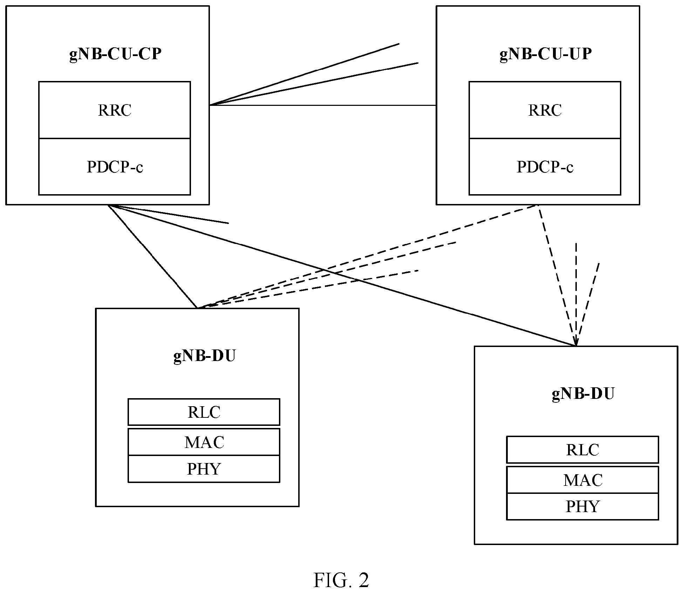

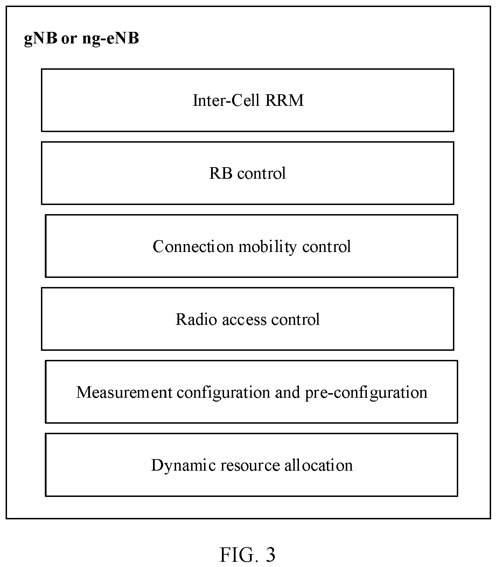

In a current 5G RAN network architecture, as shown in FIG. 2, a gNB-CU-CP may implement functions of an RRC protocol and a PDCP-C protocol, and main functions of an RRC protocol layer include functions such as mobility management Mobility management and access control Access Control. The functions such as Mobility management and Access Control are a part of a radio network management (radio resource management, RRM) function. As shown in FIG. 3, RRM mainly includes functions such as radio admission control Radio Admission Control and connection mobility management Connection Mobility Control. In view of this, it can be learned that current main RRM functions (including access control, mobility management, and the like) are all performed by the gNB-CU-CP.

However, because the gNB-CU-CP cannot sense status information of available resources of a gNB-DU and a gNB-CU-UP, when a terminal device requests to access a target cell, an operation of allocating a resource to the UE by a target-gNB-CU-UP and a target-gNB-DU may fail due to resource limitation, and consequently, the UE fails to perform access or fails to be handed over.

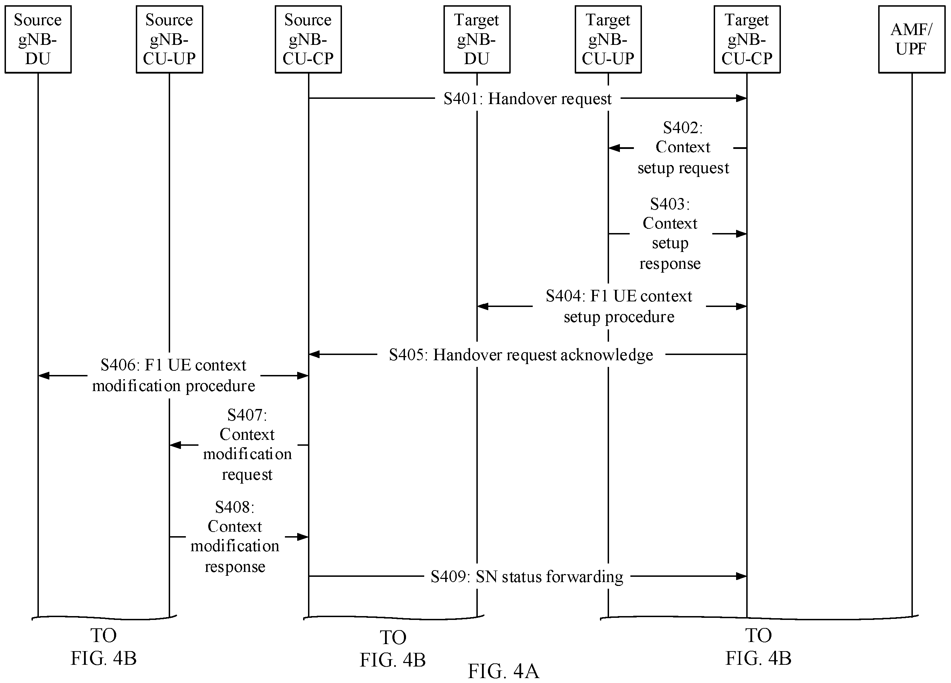

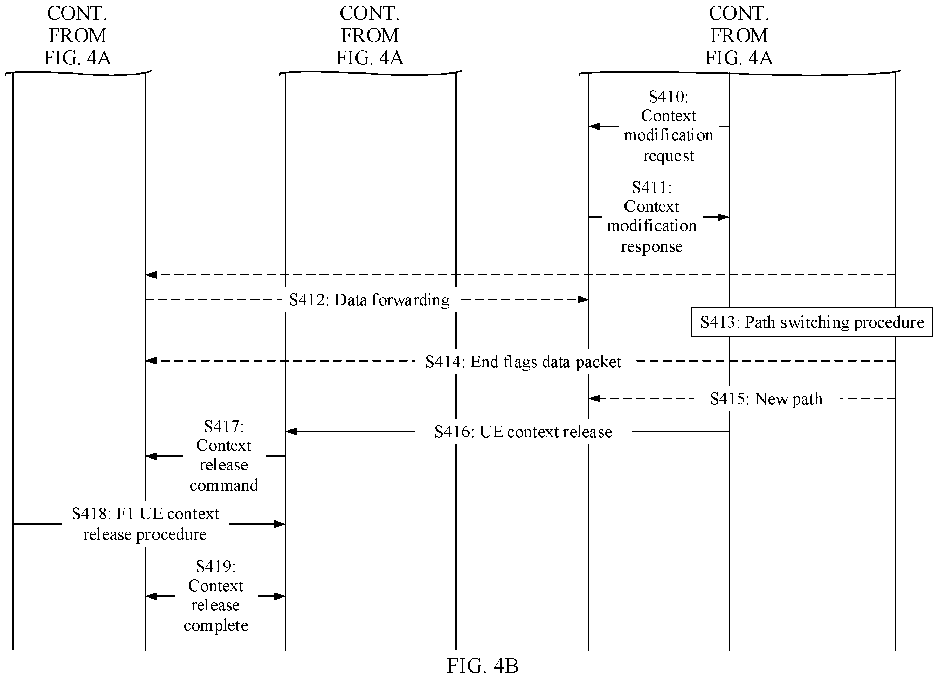

For example, in a 5G RAN architecture, UE handover is used as an example. As shown in FIG. 4A and FIG. 4B, a source-gNB-CU-UP (source-CU-UP, S-CU-UP) of a source cell may determine, based on a measurement report of UE, to perform handover (handover, HO) processing for the UE, further determine a target cell or a base station for handover, and initiate a handover processing procedure to a target-CU-UP (target-CU-UP, T-CU-UP) of the target cell or the base station. After receiving a handover request, the target-gNB-CU-CP performs access control (for example, determines whether the UE is allowed to access the target cell or base station according to a control policy such as a user/UE blacklist and whitelist and a quantity of users). If the UE access is allowed, the target-gNB-CU-CP initiates target side network elements (such as the target-gNB-CU-UP and target-gNB-DU) to allocate a resource to the UE and create a context of the UE. In this process, after receiving the handover request, if the UE access is allowed, the target-gNB-CU-CP directly exchanges signaling with the target-gNB-CU-UP and the target-gNB-DU, to trigger operations such as allocation of the related resource. However, because a gNB-CU-CP cannot sense status information of available resources of a gNB-DU and a gNB-CU-UP, the target-gNB-CU-UP and the target-gNB-DU may fail to allocate the resource to the UE due to resource limitation, and this causes a handover failure. In this scenario, unnecessary signaling exchange between network elements is generated, and consequently network resources (for example, signaling exchange between the source-gNB-CU-CP and the target-gNB-CU-CP and between the target-gNB-CU-CP and the target-gNB-DU/target-gNB-CU-UP) are wasted.

Alternatively, an example is used in which UE initially accesses a network, in a 5G-RAN architecture, when accessing a target cell, the UE needs to send an RRC request to a T-CU-CP. When there are a plurality of UEs and a plurality of cells, a large amount of signaling exchange is generated between the UE and each T-CU-CP. This inevitably causes a resource waste.

Currently, no relatively good solution is proposed to overcome, in subsequent application of the new RAN, the problem caused by execution of the main RRM functions by the gNB-CU-CP in the 5G-RAN.

This application provides a mobility management method. It is determined, by using context information of a terminal device and resource status information of a target cell, whether the terminal device is allowed to access a cell, so that determining can be performed before the terminal device accesses the target cell, to improve an access success rate, avoid a resource waste, and implement centralized control on a plurality of cells.

FIG. 1 is a schematic diagram of a system architecture of a new RAN to which an embodiment of this application is applied. A radio access management controller controls and optimizes a functional network element of the new RAN and a delay-insensitive service of a resource, executes an AI/ML, workflow (including model training and update), and manages an application/a feature according to a policy. The radio access management controller mainly provides a management plane function. Therefore, the radio access management controller is co-deployed with a management entity. A radio access intelligent controller controls and optimizes a functional network element (such as a CU-CP) of the new RAN and a resource based on data collection and operation instructions of an interface (such as R2, R3, or R4) between the radio access intelligent controller and the functional network element of the new RAN. The CU-CP implements control plane functions of an RRC protocol and a PDCP protocol. The CU-UP implements a user plane function of a PDCP protocol and a function of an SDAP protocol, and the DU implements functions of a RLC/MAC/High-PHY protocol.

It should be understood that, the schematic diagram of the system architecture of the new RAN shown in FIG. 1 is merely an example. Embodiments of this application may also be applied to another system architecture indicating the new RAN. This is not limited in this application.

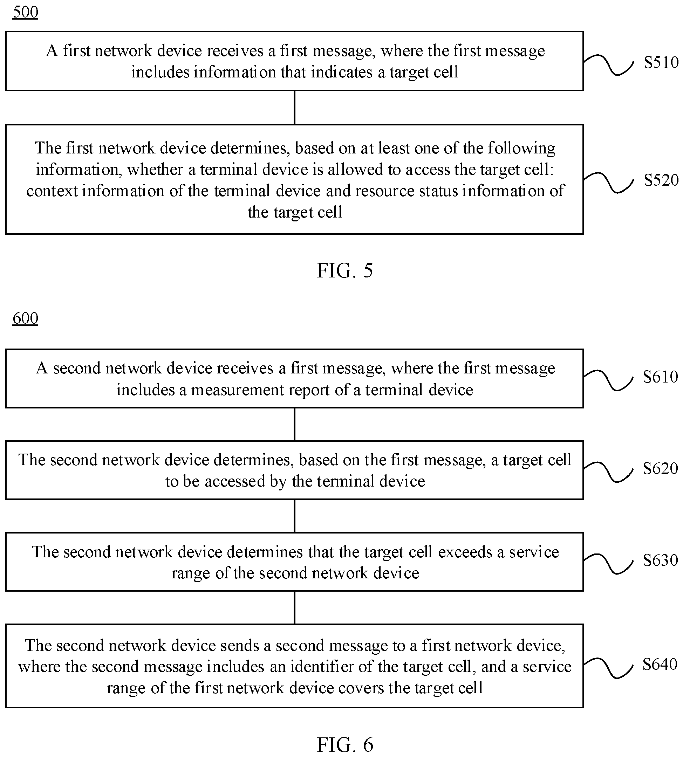

FIG. 5 is a schematic diagram of a mobility management method according to an embodiment of this application. As shown in FIG. 5, the method includes steps S510 and S520. The following describes the two steps in detail.

S510: A first network device receives a first message, where the first message includes information that indicates a target cell.

Optionally, the first network device may be a radio access intelligent controller, and the radio access intelligent controller may control and optimize a functional network element (such as a CU-CP) of a new RAN and a resource.

In an embodiment, the first message may include a measurement report of a terminal device.

Optionally, the measurement report of the terminal device may be obtained from a base station or a network device that serves a source cell.

Optionally, when the first message includes the measurement report of the terminal device, the first network device may determine the target cell based on the measurement report. Specifically, the first network device may determine, based on information carried in the measurement report, whether the current terminal device needs to be handed over to a cell. If handover is determined to be performed, the first network device may further determine the target cell based on quality information that is between the terminal device and a plurality of cells and that is carried in the measurement report.

In another embodiment, the first message may include an identifier of the target cell.

Optionally, the first network device may also directly receive the identifier of the target cell.

S520: The first network device determines, based on at least one of the following information, whether the terminal device is allowed to access the target cell: context information of the terminal device and resource status information of the target cell.

Optionally, the first network device may locally store the context information (such as a UE identifier, quality of service (quality of service, QoS) information, and session information (such as user plane tunnel/bearer routing information or a session identifier)) of the terminal device. If the first network device does not locally store the context information of the terminal device, the first network device may obtain the context information via another network device. Specifically, the method further includes: The first network device sends a fourth message, where the fourth message is used to request to obtain the context information of the terminal device. The first network device receives the context information of the terminal device.

Optionally, the resource status information of the target cell may include a radio control resource such as a bandwidth.

It should be understood that, a conventional technology of the new RAN already supports a case in which the radio access intelligent controller monitors performance data (such as resource status information) of the CU-CP/a DU/a CU-UP based on an R2/R3/R4 interface. Therefore, in this application, the radio access intelligent controller has learned of the performance data of the CU-CP/DU/CU-UP. In solutions of this application, the radio access intelligent controller can perform access control based on a resource status, or determine, based on the resource status, whether the terminal device is allowed to access the target cell.

Optionally, the first network device may further determine, according to an access control policy, whether the terminal device is allowed to access the target cell.

Optionally, the access control policy may include information such as a UE blacklist and a user quantity limit (for example, determining whether the UE is in the blacklist or is not allowed to access a network, or whether a set user quantity upper limit is exceeded after the UE accesses the network).

Optionally, the access control policy may be received by the first network device. Specifically, the method further includes: The first network device receives a sixth message, where the sixth message includes the access control AC policy.

Alternatively, optionally, the first network device may receive a message for creating a policy instance, and create a corresponding access control policy.

In an embodiment, after determining that access to the target cell is allowed, the first network device may continue to send a message to request to initiate a handover procedure to the target cell. Specifically, the method further includes: The first network device sends a second message, where the second message is used to initiate the handover procedure to the target cell.

It should be understood that the second message herein is used to initiate the handover procedure to the target cell, and does not indicate that the second message is sent to the target cell. The second message may be sent to a base station or a network device that serves the target cell, or the second message may be sent to a base station or a network device that serves another cell. The base station and the network device that serves the target cell or the another cell are network devices that may initiate the handover procedure to the target cell based on the second message.

In an embodiment, after determining the target cell, the first network device may directly send the second message to the base station or the network device that serves the target cell, to initiate the handover procedure to the target cell. Specifically, that the first network device sends a second message, where the second message is used to initiate the handover procedure to the target cell includes: The first network device sends the second message to a second network device, where the second network device is a network device that serves the target cell.

Optionally, when the first network device directly sends the second message to the base station or the network device that serves the target cell, in order to complete handover between the terminal device and the target cell, the first network device may further send a message to the source cell (namely, a cell to which the terminal device is connected before the handover), to notify that the terminal device has been handed over to the target cell currently. Specifically, the method further includes: The first network device sends a third message to a third network device, where the third message includes information about the handover of the terminal device to the target cell, the third network device is a network device that serves the source cell, and the source cell is the cell to which the terminal device is connected before the handover procedure occurs.

Optionally, the third message may include handover indication information (for example, an HO to T-CU-CP indication) and target RRC information. The HO to T-CU-CP indication may be used to notify the network device that serves the source cell that the UE has been handed over to the network device in the target cell. The target RRC information may be used to notify the network device that serves the source cell to initiate RRC reconfiguration processing, and send the target RRC information to the UE (to enable the UE to set up a new RRC connection to the target cell). The target RRC information may include an identifier of the target cell, routing information of a T-CU-CP/T-CU-UP/T-DU, and the like.

Optionally, after receiving the information that is sent from the target cell and that indicates that the terminal device has been handed over to the target cell, the first network device may send the third message to the network device that serves the source cell. Further, the first network device may update the local context information of the terminal device based on the received information sent from the target cell, where the updated context information may include information such as an RRC configuration of the target cell.

In another embodiment, after determining the target cell, the first network device may send a message to the base station or the network device that serves the another cell, to request to initiate the handover procedure. The another cell may be a cell currently connected to the terminal device or a cell connected to the terminal device before the handover procedure occurs. Specifically, that the first network device sends a second message, where the second message is used to initiate the handover procedure to the target cell includes: The first network device sends the second message to a fourth network device, where the fourth network device is a network device that serves the source cell, and the source cell is the cell to which the terminal device is connected before the handover procedure occurs.

Optionally, the fourth message may include handover indication information (for example, an HO to T-CU-CP indication) and target RRC information. The HO to T-CU-CP indication may be used to notify the network device that serves the source cell that the UE has been handed over to the network device in the target cell. The target RRC information may be used to notify the network device that serves the source cell to initiate RRC reconfiguration processing, and send the target RRC information to the UE (to enable the UE to set up a new RRC connection to the target cell). The target RRC information may include an identifier of the target cell, routing information of a T-CU-CP/T-CU-UP/T-DU, and the like.

In an embodiment, after performing handover to the target cell, the first network device may update the context information of the terminal device. Specifically, the method further includes: The first network device receives a fifth message, where the fifth message is used by the first network device to update the context information of the terminal device.

Optionally, context information of the terminal device updated by the first network device may include information such as a routing address obtained after the handover.

In this embodiment of this application, it is determined, by sensing network resource statuses of a plurality of cells and/or the context information of the terminal, whether the terminal device is allowed to access the target cell. This avoids an access failure caused by insufficient resources of a network device, to reduce unnecessary signaling exchange between RAN network elements, reduce a resource waste, improve an access success rate, and implement centralized control on the plurality of cells.

FIG. 6 is a schematic diagram of another mobility management method according to an embodiment of this application. As shown in FIG. 6, the method includes steps S610 to S640. The following describes these steps in detail.

S610: A second network device receives a first message, where the first message includes a measurement report of a terminal device.

Optionally, the second network device may be a radio access intelligent controller.

Optionally, the measurement report may be obtained from the second network device that serves a source cell.

S620: The second network device determines, based on the first message, a target cell to be accessed by the terminal device.

Optionally, the second network device may determine, based on quality information that is between the terminal device and a plurality of cells and that is carried in the measurement report, whether to perform handover, and further determine the to-be-accessed target cell when determining to perform handover.

S630: The second network device determines that the target cell exceeds a service range of the second network device.

The second network device determines, based on information carried in the measurement report, that the to-be-accessed target cell exceeds the service range of the second network device.

S640: The second network device sends a second message to a first network device.

In an embodiment, the second message includes an identifier of the target cell, and a service range of the first network device covers the target cell.

In an embodiment, the method further includes: The second network device receives a third message, where the third message includes information about handover of the terminal device to the target cell. The second network device sends a fourth message, where the fourth message includes the information about the handover of the terminal device to the target cell.

Optionally, the fourth message may include handover indication information (for example, an HO to T-CU-CP indication) and target RRC information. The HO to T-CU-CP indication may be used to notify the network device that serves the source cell that the UE has been handed over to a network device in the target cell. The target RRC information may be used to notify the network device that serves the source cell to initiate RRC reconfiguration processing, and send the target RRC information to the UE (to enable the UE to set up a new RRC connection to the target cell). The target RRC information may include an identifier of the target cell, routing information of a T-CU-CP/T-CU-UP/T-DU, and the like.

The second network device may send, based on the received information about the handover of the terminal device to the target cell, a message to a base station or the network device that serves the source cell, to notify the base station or the network device that serves the source cell that the terminal device has completed handover to the target cell.

In this embodiment of this application, the target cell to be accessed is determined by sensing resource statuses of a plurality of cells. When the target cell exceeds the service range of the second network device, information about the target cell is sent to another network device, so that the another network device can further initiate a handover procedure to the target cell. This reduces unnecessary signaling exchange between RAN network elements, reduces a resource waste, improves an access success rate, and implements centralized control on the plurality of cells.

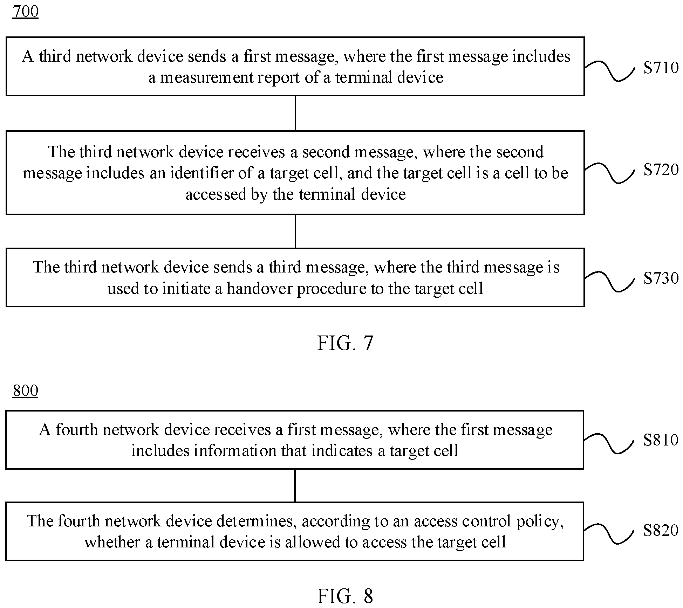

FIG. 7 is a schematic diagram of another mobility management method according to an embodiment of this application. As shown in FIG. 7, the method includes steps S710 to S730. The following describes these steps in detail.

S710: A third network device sends a first message, where the first message includes a measurement report of a terminal device.

Optionally, the third network device may be a base station or a network device in a source cell that currently provides a service for the terminal device, and the measurement report sent by the third network device may be obtained from the terminal device.

S720: The third network device receives a second message, where the second message includes an identifier of a target cell, and the target cell is a cell to be accessed by the terminal device.

The third network device may send the measurement report to another network device such as a first network device in this application, so that the first network device may determine, based on the measurement report, that the target cell can be accessed, and the third network device obtains information about the target cell from the first network device.

S730: The third network device sends a third message, where the third message is used to initiate a handover procedure to the target cell.

In this embodiment of this application, the received measurement report of the terminal device is sent to the another device such as the first network device, so that the another device can determine the target cell based on the measurement report and send the information about the target cell to the third network device. This avoids a case in which the third network device (such as a base station or a network device that serves the source cell) needs to determine the target cell based on the measurement report, thereby avoiding a subsequent access failure of a network device due to insufficient resources, reducing unnecessary signaling exchange between RAN network elements, reducing a resource waste, improving an access success rate, and implementing centralized control of a plurality of cells.

FIG. 8 is a schematic diagram of another mobility management method according to an embodiment of this application. As shown in FIG. 8, the method includes steps S810 and S820. The following describes these steps in detail.

S810: A fourth network device receives a first message, where the first message includes information that indicates a target cell.

Optionally, the fourth network device may be a radio access intelligent controller whose service range covers the target cell.

In an embodiment, this embodiment of this application may be applied to a scenario in which a terminal device switches from an inactive (inactive) mode to a connected (connected) mode. In this case, the first message received by the fourth network device is used to request to obtain context information of the UE.

In another embodiment, this embodiment of this application may be applied to a scenario in which a terminal device initially accesses a network. Specifically, the first message is used to request to access the target cell.

Optionally, before receiving the access request, the fourth network device may send a message to a plurality of network devices or base stations that service a cell, to notify the plurality of network devices or base stations to report the access request to the fourth network device when receiving the access request. Specifically, the fourth network device sends a fourth message, where the fourth message indicates a network device in the target cell to report the access request to the fourth network device when receiving the access request.

The network device in the target cell is indicated to report the access request to the fourth network device when receiving the access request, so that the fourth network device can perform centralized control on a cell within the service range of the fourth network device. Therefore, signaling exchange between network elements in a wireless network can be reduced, a resource waste is reduced, and a centralized control capability of a network is improved.

S820: The fourth network device determines, according to an access control policy, whether the terminal device is allowed to access the target cell.

Optionally, the access control policy may include information such as a UE blacklist and a user quantity limit (for example, determining whether the UE is in the blacklist or is not allowed to access a network, or whether a set user quantity upper limit is exceeded after the UE accesses the network).

Optionally, the access control policy may be received by the fourth network device. Specifically, the method further includes: The fourth network device receives a sixth message, where the sixth message includes the access control policy.

In the scenario in which the terminal device switches from the inactive (inactive) mode to the connected (connected) mode, the fourth network device may send the context information of the terminal device to the network device that serves the target cell. Specifically, the first message is used to request to obtain the context information of the terminal device. The method further includes: The fourth network device sends a second message, where the second message includes the context information of the terminal device.

Optionally, the fourth network device may locally store the context information of the UE, so that the fourth network device sends a context information of the UE when receiving a request for obtaining the context of the UE. In this way, the network device that serves the target cell can be prevented from sending a request to a network device of a cell previously serving the terminal device to obtain the context information. According to the method in this application, UE-related information on a network element in the target cell can be restored based on the context information locally stored by the fourth network device, to reduce signaling exchange between network elements and reduce a resource waste.

In an embodiment, the method further includes: The fourth network device receives a third message, where the third message is used by the fourth network device to update the context information of the terminal device.

The context information of the terminal device on the fourth network device is updated, so as to perform access control on the terminal device more accurately based on updated context information.

In an embodiment, the method further includes: The fourth network device sends a fifth message, where the fifth message includes information indicating that the terminal device is allowed to access the target cell.

The access control policy is received, so that the fourth network device can perform an access control process according to the access control policy. Compared with a 5G RAN, an access control function of the 5G RAN can be decoupled from a CP, to implement centralized control on a network of a plurality of cells, thereby reducing unnecessary signaling exchange between RAN network elements, and reducing a resource waste.

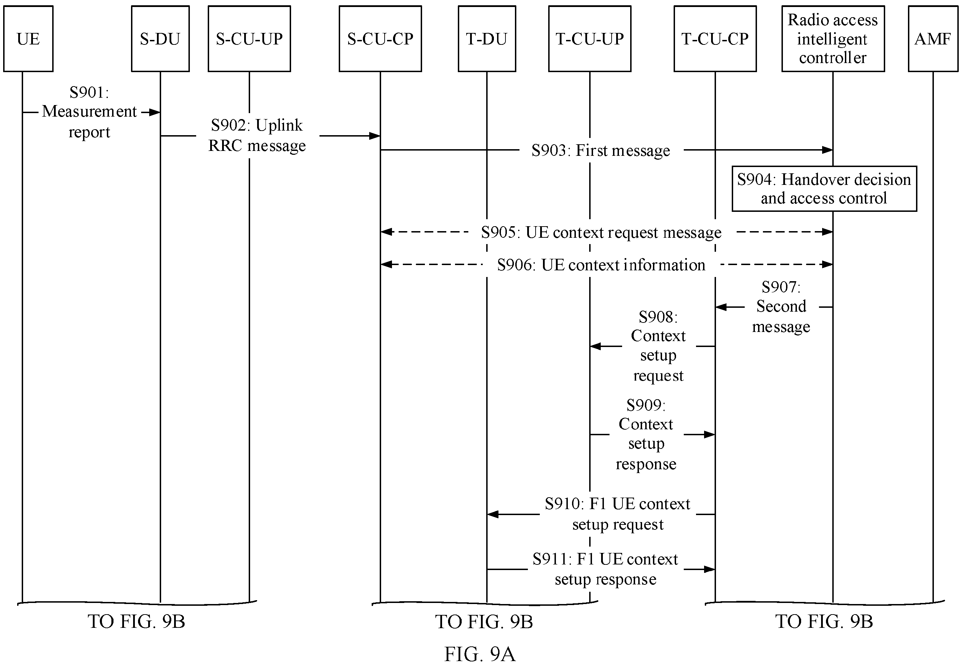

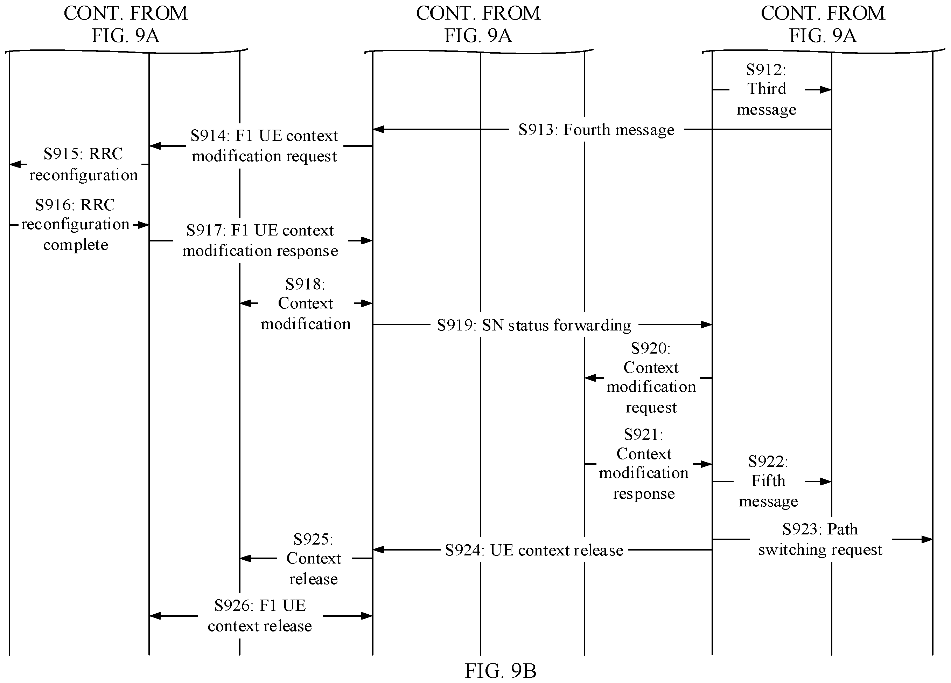

FIG. 9A and FIG. 9B are a schematic flowchart of UE handover according to an embodiment of this application. As shown in FIG. 9A and FIG. 9B, the following steps are included.

S901: UE sends a measurement report (Measurement report) to a source-DU (source-DU, S-DU). Specifically, the UE performs signal measurement based on a measurement configuration of a network for the UE, and sends a measurement result to the S-DU as the measurement report. The UE Measurement report may include a UE identifier and reference signal received power (Reference Signal Received Power, RSRP), reference signal received quality (Reference Signal Received Quality, RSRQ), and a reference signal-signal to interference plus noise ratio (Reference Signal-Signal to Interference plus Noise Ratio, RS-SINR) measured by the UE.

S902: The S-DU sends an uplink RRC message to a source CU-CP (source CU-CP, S-CU-CP), where the uplink RRC message may carry the measurement report received in S901.

S901 and S902 belong to a conventional technology. For a specific process, refer to the conventional technology.

S903: The S-CU-CP sends a first message to a radio access intelligent controller. Specifically, after receiving information about the measurement report of the UE, the S-CU-CP may send the UE Measurement report to the radio access intelligent controller via an R2 interface message (for example, a reported message) between the S-CU-CP and the radio access intelligent controller.

S904: The radio access intelligent controller performs handover decision and access control.

Specifically, after receiving the measurement report of the UE, the radio access intelligent controller needs to perform three service functions.
(1) Handover decision: The radio access intelligent controller performs handover decision based on the information about the UE Measurement report, that is, determines whether to perform handover of the UE. Specifically, the radio access intelligent controller may determine, based on a preset threshold, whether the UE that sends the measurement report needs to be handed over to a cell. For example, the radio access intelligent controller may determine, based on a first threshold, that the RSRP in the measurement report does not meet the first threshold. In this case, the radio access intelligent controller may trigger a handover procedure.

After determining to trigger the handover procedure, the radio access intelligent controller further determines a target cell for handover. Specifically, the radio access intelligent controller may determine, based on channel quality information that is of the UE and another cell and that is carried in the measurement report, the target cell to which handover is to be performed.

(2) Access control: The radio access intelligent controller performs access control on the UE based on a UE requirement in a locally stored UE context (for example, QoS information or a bandwidth requirement in the context), a resource status of a network element (including a T-CU-CP, T-CU-UP, or a T-DU) corresponding to the target cell (where for example, an available resource status of the network element corresponding to the target cell can meet a service requirement of the UE), and an access control (access control, AC) policy.

The access control policy may be information such as a UE blacklist and a user quantity limit (for example, determining whether the UE is in the blacklist or is not allowed to access a network, or whether a set user quantity upper limit is exceeded after the UE accesses the network). The UE context includes information such as a UE identifier, service QoS, and session information (such as user plane tunnel/bearer routing information or a session identifier).

It should be understood that, a conventional technology of a new RAN already supports a case in which the radio access intelligent controller monitors performance data (such as resource status information) of a CU-CP/DU/CU-UP based on an interface between the radio access intelligent controller and a network element of the new RAN. Therefore, in this application, the radio access intelligent controller has learned of the performance data of the CU-CP/DU/CU-UP. In solutions of this application, the radio access intelligent controller can perform access control based on a resource status.

In a possible implementation, when the radio access intelligent controller finds in this step that a resource status of the target cell determined in a handover decision process does not meet the requirement of the UE, the radio access intelligent controller may reselect a proper target cell by using information that is about the another cell and that is indicated in the measurement report reported by the UE.

(3) Trigger of handover processing of the target cell: If access control verification succeeds, the UE is allowed to access the target cell, and the radio access intelligent controller indicates the network element corresponding to the target cell to perform handover-related processing.

Optionally, in S905, the radio access intelligent controller sends a UE context request message to the S-CU-CP.

Specifically, if the radio access intelligent controller does not locally store context information of the UE, in step S904, after completing handover decision processing, the radio access intelligent controller cannot perform access control determining on the UE based on the context information of the UE. Therefore, the radio access intelligent controller requests the context of the UE from the S-CU-CP via the R2 interface message, where the request message carries a UE identifier (UE ID) and a requested data type (UE context request indicator).

Alternatively, optionally, the radio access intelligent controller may obtain the context of the UE in a data subscription manner (by using an R2 Subscription message for a requested data type that is the UE context) currently supported by an R2/R3/R4 interface. A specific manner is not specifically limited in this application.

Optionally, in S906, the S-CU-CP sends the context information of the UE to the radio access intelligent controller.

In a possible implementation, the S-CU-CP returns the context information of the UE to the radio access intelligent controller based on the request of the radio access intelligent controller, and may send the UE context to the radio access intelligent controller based on the R2 interface message (for example, an R2 Indication message) between the S-CU-CP and the radio access intelligent controller.

S907: The radio access intelligent controller sends the first message to the T-CU-CP. The second message may indicate the network element corresponding to the target cell to allocate a resource to the UE and create local context information.

Specifically, based on a processing result of step S904, the radio access intelligent controller may indicate, based on an R2 interface message (for example, an R2 control message), the network element corresponding to the target cell to allocate the resource to the UE, and create the local context information, in other words, send the R2 control message to the target CU-CP/T-CU-CP, and include information such as operation indication information (for example, a UE context setup indication) and a UE context (UE context) in the message.

S908: The T-CU-CP sends a request message of a bearer context setup request to the T-CU-UP. The T-CU-CP initiates, based on the indication of the radio access intelligent controller, handover processing of the network element corresponding to the target cell. The T-CU-CP sends the request message of the bearer context setup request to the T-CU-UP, to request the T-CU-UP to allocate the resource to the UE and create an E1 interface bearer.

S909: After completing resource allocation and related processing operations, the T-CU-UP returns a response message of a bearer context setup response.

S910: The T-CU-CP sends a request message of an F1 UE context setup request to the T-DU, to request the T-DU to allocate the resource to the UE and create an F1 interface bearer.

S911: After completing resource allocation and related processing operations, the T-DU returns a response message of an F1 UE context setup response.

S912: The T-CU-CP sends a third message to the radio access intelligent controller, where the third message may include a local UE Context of the T-CU-CP.

Specifically, after the T-CU-CP completes establishment of related resources of the T-DU and the T-CU-UP (in other words, receives the acknowledgment response messages in step 909 and step 910), the T-CU-CP completes handover processing of the network element corresponding to the target cell, and sends the local UE Context of the T-CU-CP to the radio access intelligent controller via the R2 interface message (for example, an R2 Indication). The radio access intelligent controller may update, based on the UE Context sent by the T-CU-CP, a locally stored UE-related context of the radio access intelligent controller.

S913: The radio access intelligent controller sends a fourth message to the S-CU-CP, to indicate a network element corresponding to a source cell to perform an operation such as RRC reconfiguration.

Specifically, after determining that resource allocation and related handover processing have been completed on the network element corresponding to the target cell, the radio access intelligent controller indicates, based on the R2 interface message (for example, the R2 control message), the network element corresponding to the source cell to perform RRC reconfiguration, release a related resource, and delete UE-related context information, that is, sends the R2 control message to the source CU-CP/S-CU-CP, where the message carries handover indication information (for example, an HO to T-CU-CP indication) and target RRC information.

The HO to T-CU-CP indication may be used to notify the S-CU-CP of the T-CU-CP to which the UE has been handed over. The target RRC information is used to notify the S-CU-CP to initiate RRC reconfiguration processing, and send the target RRC information to the UE (to enable the UE to set up a new RRC connection to the target cell). The target RRC information includes an identifier of the target cell, routing information of the T-CU-CP/T-CU-UP/T-DU, and the like.

S914: The S-CU-CP sends a request message of an F1 UE context modification request to the S-DU. The S-CU-CP initiates, based on the indication of the radio access intelligent controller, handover processing of the network element corresponding to the source cell. The message may carry the target RRC information in step S913, to request the S-DU to initiate RRC reconfiguration processing.

S915: The S-DU indicates the UE to perform RRC reconfiguration, in other words, sends an RRC reconfiguration message to the UE, where the message carries the target RRC information in step 913.

S916: After receiving the request message, the UE performs a corresponding RRC configuration update, and returns an RRC reconfiguration complete message to the S-DU.

S917: After receiving the response message of the UE, the S-DU returns a response message of an F1 UE context modification response to the S-CU-CP.

S918: The S-CU-CP and the S-CU-UP perform signaling exchange related to a bearer context modification procedure, to update a route of an E1 bearer, and obtain a transfer status of user data (for example, an SN number of a data packet) from the S-CU-UP.

S919: The S-CU-CP newly sends the transfer status of the user data, a routing address of the S-CU-UP, and the like to the T-CU-CP via an SN status transfer message.

S920: After receiving the message from the S-CU-CP, the T-CU-CP sends a Bearer context modification request message to the T-CU-UP, where the Bearer context modification request message carries the routing address of the S-CU-UP in step 919, and is used to establish a data forwarding channel between the T-CU-UP and the S-CU-UP. A reason for establishing the channel is: After RRC reestablishment, some data on a CP-UP of the source cell may not be sent to the UE. In this case, the data may be first sent to the CU-UP of the new cell, and then the new CU-UP sends the data to the UE.

S921: After completing processing, the T-CU-UP returns a Bearer context modification response message to the T-CU-CP.

S922: The T-CU-CP sends a fifth message to the radio access intelligent controller, where the message may carry UE context information updated by the T-CU-CP. Specifically, after determining that the network element in the source cell completes processing, the T-CU-CP sends, via the R2 interface message (for example, the R2 Indication), a UE Context updated by a T-CP-CP to the radio access intelligent controller. The radio access intelligent controller updates, based on the UE Context sent by the T-CP-CP, the locally stored UE-related context of the radio access intelligent controller again. In this case, the updated UE context information may include updated routing address information.

S923: The T-CU-CP exchanges information with a core-network network element (for example, an AMF), for example, sends a path switch request message to the AMF to update a user plane downlink routing address.

S924: The T-CU-CP determines that the handover processing is completed, and notifies the S-CU-CP (for example, by sending a UE context release message) that a UE-related context on the network element in the source cell can be deleted, and the resource is released.

S925: The S-CU-CP sends a Bearer context release request message to the S-CU-UP to release the E1 interface bearer.

S926: The S-CU-CP sends an F1 context release request message to the S-DU to release the F1 interface bearer.

This embodiment of this application is applied to the handover procedure in an architecture of the new RAN. The radio access intelligent controller may directly perform handover decision and access control by sensing a resource status of a RAN network element and based on the UE context and the AC policy, to directly initiate handover processing for the target cell. In this way, unnecessary signaling exchange between RAN network elements can be reduced, and a handover success rate can be improved.

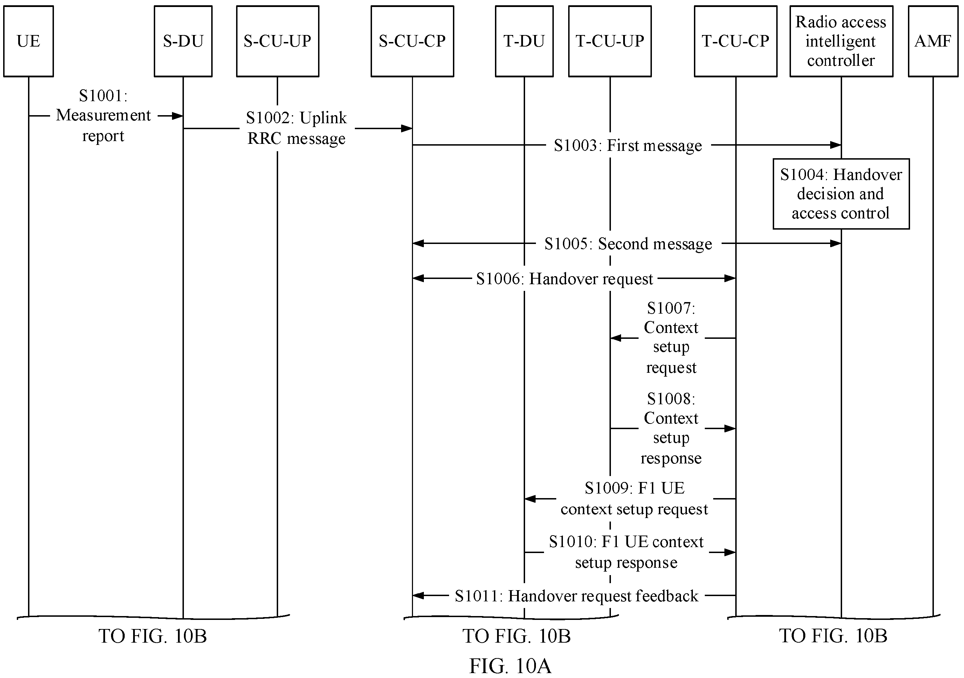

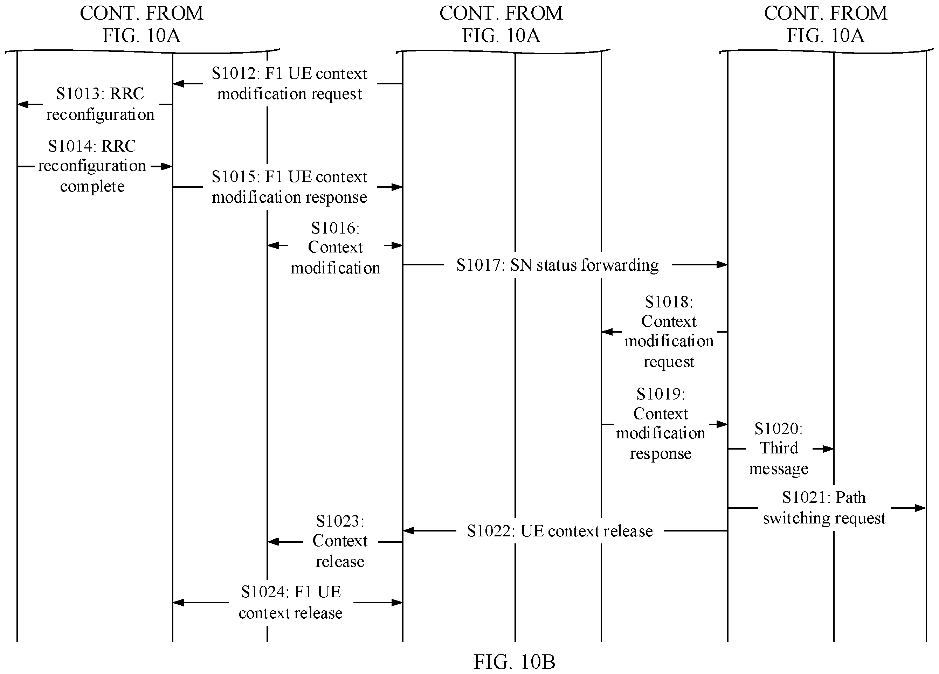

FIG. 10A and FIG. 10B are a schematic flowchart of another UE handover according to an embodiment of this application. As shown in FIG. 10A and FIG. 10B,

S1001 to S1003 are the same as S901 to S903 in FIG. 9A and FIG. 9B, and details are not described herein again.

S1004: The radio access intelligent controller performs handover decision and access control. Specifically, after receiving the measurement report of the UE, the radio access intelligent controller needs to perform three service functions.

(1) Handover decision and (2) access control: These steps are the same as the handover decision and access control in S1004, and details are not described herein again.

(3) Trigger of a source cell to initiate a handover procedure: If access control verification succeeds, the UE is allowed to access a target cell, and the radio access intelligent controller indicates a network element corresponding to the source cell to initiate handover-related processing.

S1005: The radio access intelligent controller sends a second message to the S-CU-CP, to indicate the source cell to perform handover processing.

Specifically, based on a processing result of step S1004, the radio access intelligent controller may indicate, via an R2 interface message (for example, an R2 control message), the network element corresponding to the source cell to initiate a handover processing procedure, and may send the R2 control message to the source CU-CP/S-CU-CP, where the message may carry information such as operation indication information (for example, an HO indication) and a target cell identifier (Target cell id).

S1006: After receiving a handover indication from the radio access intelligent controller, the S-CU-CP initiates signaling exchange with a target CU-CP (a network element corresponding to the target cell determined based on the target cell id), that is, sends an HO request message to the T-CU-CP.

S1007 to S1011 are the same as S908 to S911 in FIG. 9A and FIG. 9B.

S1011: After the T-CU-CP completes establishment of related resources of the T-DU and the T-CU-UP, in other words, completes handover processing of the network element corresponding to the target cell, the T-CU-CP returns an HO request ack message to the S-CU-CP to confirm that processing of the target cell is completed.

S1012 to S1024 are the same as S914 to S926 in FIG. 9A and FIG. 9B. In S1020, the T-CU-CP sends a third message to the radio access intelligent controller, where the message may carry UE context information updated by the T-CU-CP. Specifically, after determining that the network element in the source cell completes processing, the T-CU-CP sends, via the R2 interface message (for example, the R2 Indication), a UE Context updated by a T-CP-CP to the radio access intelligent controller. The radio access intelligent controller updates, based on the UE Context sent by the T-CP-CP, a locally stored UE-related context of the radio access intelligent controller again. In this case, the updated UE context information may include updated routing address information.

This embodiment of this application is applied to a handover procedure in an architecture of the new RAN. The radio access intelligent controller may directly perform handover decision and access control by sensing a resource status of a RAN network element and based on a UE context and an AC policy, and then notify the source cell of information about the target cell, so that the source cell initiates handover processing for the target cell. In this way, unnecessary signaling exchange between RAN network elements can be reduced, and a handover success rate can be improved.

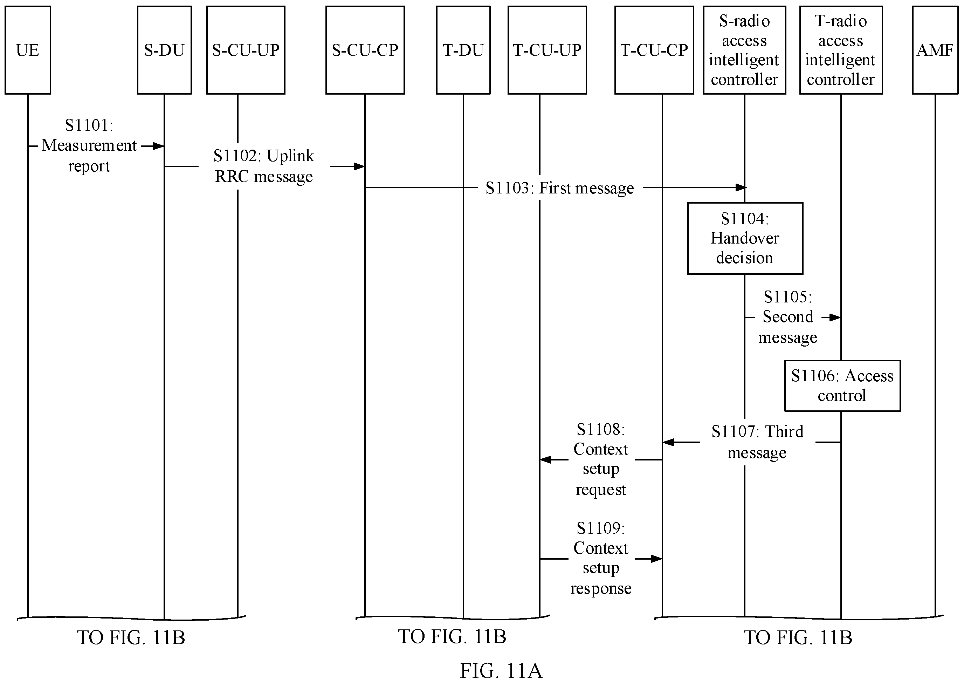

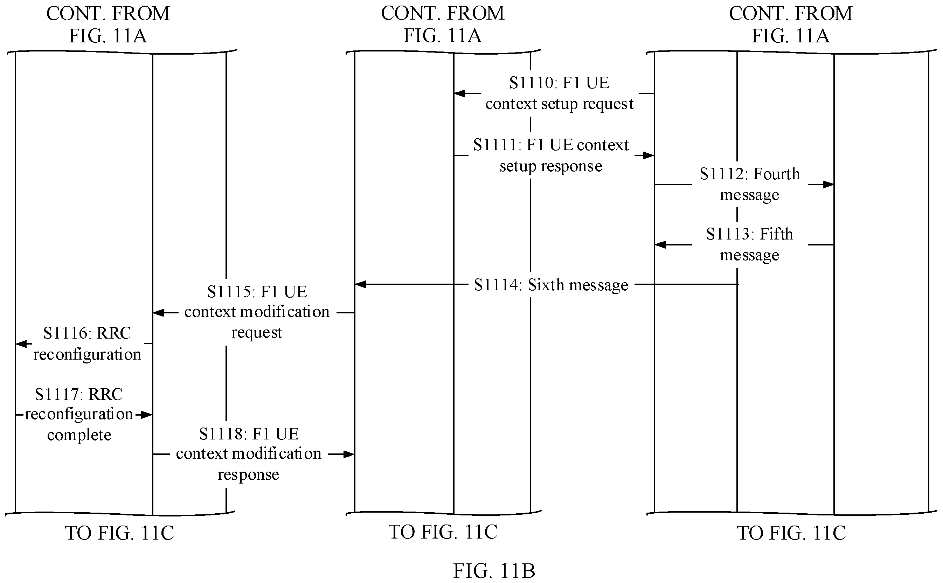

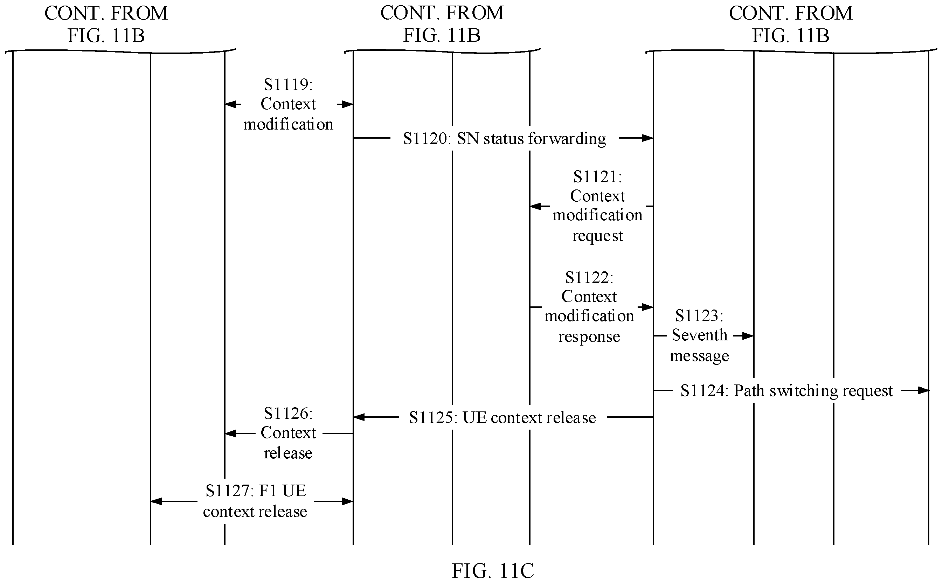

FIG. 11A, FIG. 11B, and FIG. 11C are a schematic flowchart of another UE handover according to an embodiment of this application. As shown in FIG. 11A, FIG. 11B, and FIG. 11C,

S1101 to S1103 are the same as S901 to S903 in FIG. 9A and FIG. 9B, and details are not described herein again.

S1104: A source radio access intelligent controller (S-radio access intelligent controller) performs handover decision. Specifically, after receiving the measurement report of the UE, the S-radio access intelligent controller performs handover decision, in other words, the S-radio access intelligent controller performs handover decision based on the information of the UE Measurement report. That is, the S-radio access intelligent controller determines whether to perform handover for the UE, and further determines a target cell of handover if necessary. For specific handover decision and target cell determining, refer to related descriptions in the embodiment in FIG. 10A and FIG. 10B.

S1105: The S-radio access intelligent controller sends a second message to a target radio access intelligent controller (T-radio access intelligent controller), where the second message is used to request the T-radio access intelligent controller to initiate a handover procedure to the target cell. Specifically, if the target cell determined by the S-radio access intelligent controller in step S1104 is not in a service area of the S-radio access intelligent controller, the S-radio access intelligent controller determines, based on locally stored information (where it should be understood that the information may be locally configured by the radio access intelligent controller), the target radio access intelligent controller (T-radio access intelligent controller) to which the target cell belongs, and sends a handover request message/HO request to the T-radio access intelligent controller, where the message may carry a UE identifier, a UE context, and a target cell identifier.

The handover request message may be sent through an interface between the radio access intelligent controllers. If there is no direct interface between the radio access intelligent controllers, the radio access intelligent controller indirectly forwards an interaction message between the radio access intelligent controllers. A specific method is not limited in this application.

S1106: The T-radio access intelligent controller performs access control. Specifically, the T-radio access intelligent controller receives the handover request message from the S-radio access intelligent controller, determines, based on a Target cell id in the message, a network element (including a T-CU-CP/T-CU-UP/T-DU) corresponding to the target cell, and performs access control on the UE based on a UE requirement (such as QoS information in the context) in the UE context in the message, a resource status of the network element corresponding to the target cell (where for example, an available resource status of the network element corresponding to the target cell can meet a service requirement of the UE), and an access control policy.

If access control verification succeeds, the UE is allowed to access the target cell, and the T-radio access intelligent controller indicates the network element corresponding to the target cell to perform handover-related processing.

S1107: The T-radio access intelligent controller sends a third message to the T-CU-CP, where the third message may indicate the network element corresponding to the target cell to allocate a resource to the UE and create local context information.

Specifically, based on a processing result of step S1106, the T-radio access intelligent controller indicates, based on an R2 interface message (for example, an R2 control message), the network element corresponding to the target cell to allocate the resource to the UE, and create the local context information, in other words, send the R2 control message to the target CU-CP/T-CU-CP, where the message may carry information such as operation indication information (for example, a UE context setup indication) and a UE context/UE context.

In a possible implementation, when a source cell also belongs to coverage of the T-radio access intelligent controller, the T-radio access intelligent controller may also send an indication message to the S-CU-CP that is in the source cell, to indicate the S-CU-CP to initiate the HO procedure to the network element that is in the target cell. For a specific process, refer to the embodiment shown in FIG. 11A, FIG. 11B, and FIG. 11C. Details are not described in this embodiment of this application.

S1108 to S1120 are the same as S908 to S912 in FIG. 9A and FIG. 9B. Details are not described in this embodiment of this application.

S1113: The T-radio access intelligent controller sends a fifth message to the S-radio access intelligent controller, where the fifth message may be used to notify the S-radio access intelligent controller that handover to the target cell has been completed.

Specifically, after determining that resource allocation and related handover processing have been completed on the network element corresponding to the target cell, the T-radio access intelligent controller returns a handover request response message/HO request Ack to the S-radio access intelligent controller, where the message carries the UE identifier, target RRC information, and the like.

S1114 to S1127 are the same as S913 to S926 in FIG. 9A and FIG. 9B. In S1123, the T-CU-CP sends a seventh message to the T-radio access intelligent controller, where the message may carry UE context information updated by the T-CU-CP. Specifically, after determining that the network element in the source cell completes processing, the T-CU-CP sends, via an R2 interface message (for example, an R2 Indication), a UE Context updated by a T-CP-CP to the T-radio access intelligent controller. The T-radio access intelligent controller updates, based on the UE Context sent by the T-CP-CP, a locally stored UE-related context of the T-radio access intelligent controller again. In this case, the updated UE context information may include updated routing address information.

This embodiment of this application is applied to a handover procedure in an architecture of a new RAN. Compared with the application embodiments in FIG. 9A and FIG. 9B and FIG. 10A and FIG. 10B, this embodiment of this application can implement handover service processing across radio access intelligent controllers, and can reduce signaling exchange between RAN network elements and between a RAN network element and a core-network network element.

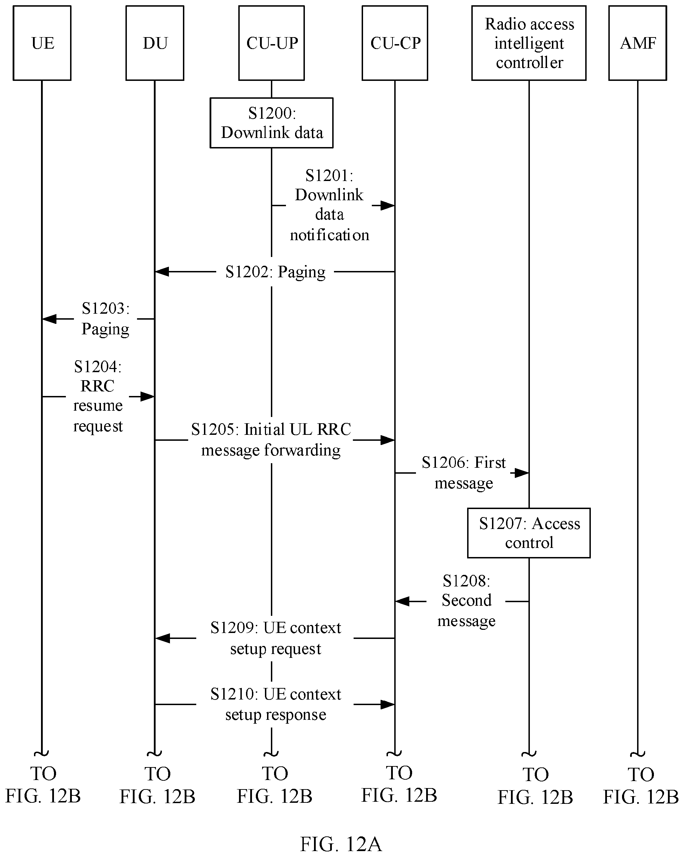

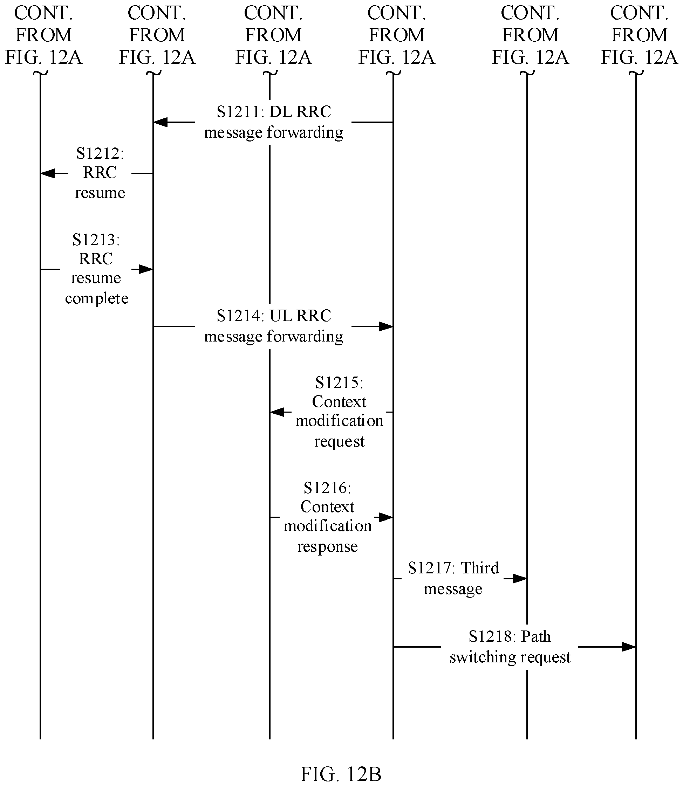

FIG. 12A and FIG. 12B are a schematic flowchart of switching UE from an inactive state to a connected state according to an embodiment of this application. As shown in FIG. 12A and FIG. 12B, the following steps are included.

S1200: When UE is in an inactive state, a CU-UP receives downlink data (downlink data, DL data) for the UE.

S1201: The CU-UP sends a downlink data notification/DL data notification message to a CU-CP through an E1 interface.

S1202: The CU-CP initiates paging/Paging for the UE.

S1203: ADU starts to page the UE in a service area range of the DU.

S1204: After receiving a paging message from the DU, the UE sends an RRC resume request/RRC resume request to the DU.

S1205: After receiving the request of the UE, the DU sends an Initial UL RRC message transfer to the CU-CP to request to obtain context information of the UE.

S1206: The CU-CP sends a first message to a radio access intelligent controller, to request to obtain a context of the UE.

Specifically, after receiving the request of the DU in S1205, the CU-CP may request, via an R2 interface message (for example, an R2 indication), to obtain the context of the UE from the radio access intelligent controller, where the message may carry an RRC resume request indication. The RRC resume request indication indicates a request type of the UE, and requests to obtain the context of the UE.

S1207: The radio access intelligent controller performs access control on the UE according to an access control policy.

If verification succeeds, the radio access intelligent controller restores a UE context on a corresponding network element based on the locally stored context of the UE.

The access control policy may include information such as a UE blacklist and a user quantity limit (for example, determining whether the UE is in the blacklist or is not allowed to access a network or whether a set user quantity upper limit is exceeded after the UE accesses the network). The UE context may include information such as a UE identifier, service QoS, and session information (such as user plane tunnel/bearer routing information or a session identifier).

S1208: The radio access intelligent controller sends a second message to the CU-CP, to indicate the CU-CP to allocate a resource to the UE.

Specifically, the radio access intelligent controller may indicate, via the R2 interface message (for example, an R2 control message), the CU-CP to allocate the resource to the UE and create local context information, that is, may send the R2 control message to the CU-CP, where the message carries information such as access grant indication information (for example, AC permission) and a UE context/UE context.

S1209: The CU-CP sends a request message of a UE context setup request to the DU, to request the DU to allocate a resource to the UE and create an F1 interface bearer.

S1210: After completing resource allocation and related processing operations, the DU returns a response message of a UE context setup response.

S1211: The CU-CP sends RRC configuration information for the UE to the DU, in other words, sends an RRC message transfer message to the DU.

S1212: The DU forwards the RRC configuration information for the UE from the CU-CP, to resume an RRC connection.

S1213: After completing RRC configuration, the UE returns an RRC resume complete message to confirm that the RRC configuration is completed.

S1214: The DU sends configuration complete acknowledgment information of the UE to the CU-CP via a UL RRC message transfer message.

S1215: After the CU-CP receives the acknowledgment message of the UE, the CU-CP sends a request message of a bearer context setup request to the CU-UP, to request the CU-UP to allocate a resource to the UE and resume an E1 interface bearer.

S1216: After completing resource allocation and related processing operations, the CU-UP returns a response message of a bearer context setup response.

S1217: The CU-CP sends a third message to the radio access intelligent controller, where the message may carry UE context information updated by the CU-CP. Specifically, after establishing related resources of the DU and the CU-UP, the CU-CP sends a local UE Context of the CU-CP to the radio access intelligent controller via the R2 interface message (for example, the R2 Indication). The radio access intelligent controller updates, based on the UE Context sent by the CU-CP, a locally stored UE-related context of the radio access intelligent controller. In this case, the updated UE context information may include updated routing address information.

S1218: The CU-CP exchanges information with a core-network network element (for example, an AMF), for example, sends a path switch request message to the AMF to update a user plane downlink routing address.

This embodiment of this application relates to a state switching process of the UE. When the UE enters the INACTIVE state, a radio bearer is deleted, and correspondingly, the CU-CP also deletes the UE context. This embodiment of this application provides a service processing procedure in which the UE changes from the INACTIVE state to the Connected state. The radio access intelligent controller may restore UE-related information on the CU-CP/CU-UP/DU based on the locally stored context information of the UE, and the CU-CP does not need to perform signaling exchange with a CU-CP that previously serves the UE, thereby reducing signaling exchange between network elements and avoiding a resource waste.

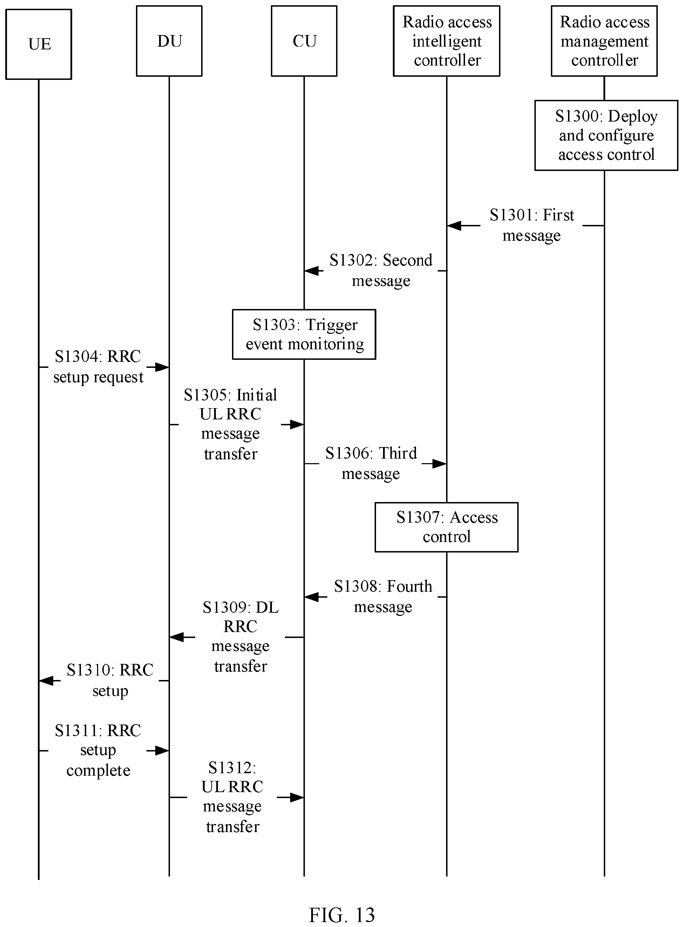

FIG. 13 is a schematic flowchart of initially accessing a network by UE according to an embodiment of this application. As shown in FIG. 13, the following steps are included.

S1300: Deploy and configure an access control policy. The access control policy may be information such as a UE blacklist and a user quantity limit (for example, determining whether the UE is in the blacklist or is not allowed to access a network or whether a set user quantity upper limit is exceeded after the UE accesses the network). Deployment and configuration of the policy may be dynamically performed by OAM, or may be performed in another policy configuration method. This is not specifically limited in this application.

S1301: A radio access intelligent controller sends a first message to a radio access intelligent controller, to create and deploy a corresponding AC policy instance on the radio access intelligent controller. Specifically, the radio access intelligent controller creates an AC Policy based on a policy request of an operator, and creates and deploys the corresponding AC Policy instance on the radio access intelligent controller through an R5 interface, in other words, sends a Create Policy instance message to the radio access intelligent controller, where the message carries the AC Policy to be deployed.

S1302: The radio access intelligent controller sends a second message to a CU-CP, to subscribe to an access signaling request of the UE from the CU-CP.

Specifically, the radio access intelligent controller may subscribe to the access signaling request of the UE from the CU-CP according to the AC policy, where the request may include an RRC Setup request and an RRC resume Request, and indicate, through "INSERT", the CU-CP to suspend a service procedure after reporting an event, and wait for operation instructions of the radio access intelligent controller.

S1303: The CU-CP monitors the signaling request of the UE based on the indication of the radio access intelligent controller.

S1304: When the UE needs to access a network, the UE sends an RRC setup request message to the network.

S1305: After receiving the request of the UE, the DU sends an Initial UL RRC message transfer to the CU-CP to forward the RRC setup request message of the UE.

S1306: The CU-CP sends a third message to the radio access intelligent controller, where the message may carry the RRC setup request message received in S1305.

Specifically, when monitoring reception of the RRC setup request, the CU-CP reports a request message of the RRC setup request of the UE to the radio access intelligent controller, in other words, sends an information reporting message to the radio access intelligent controller via an R2 interface message (for example, anR2 indication), where the message carries the RRC setup request.

S1307: The radio access intelligent controller performs access control on the UE according to the access control policy.

If verification succeeds, the radio access intelligent controller indicates the CU-CP to allocate a resource to the UE, and create a related context (that is, perform step S1308).

The access control policy may include the information such as the UE blacklist and the user quantity limit (for example, determining whether the UE is in the blacklist or is not allowed to access the network or whether the set user quantity upper limit is exceeded after the UE accesses the network). The UE context includes information such as a UE identifier, service QoS, and session information (such as user plane tunnel/bearer routing information or a session identifier).

S1308: The radio access intelligent controller sends a fourth message to the CU-CP, to indicate the CU-CP to allocate the resource to the UE.

Specifically, the radio access intelligent controller indicates, via the R2 interface message (for example, an R2 control message), the CU-CP to allocate the resource to the UE and create local context information, that is, sends the R2 control message to the CU-CP, where the message carries information such as access grant indication information (for example, AC permission) and a UE context/UE context.

S1309: The CU-CP sends RRC configuration information for the UE to the DU, in other words, sends a DL RRC message transfer message to the DU.

S1310: The DU forwards the RRC configuration information for the UE from the CU-CP, to set up an RRC connection, that is, sends an RRC setup request message to the UE.

S1311: After completing RRC configuration, the UE returns an RRC setup complete message to confirm that the RRC configuration is completed. The RRC setup complete message may carry a NAS request (for example, a Registration NAS) of the UE.

S1312: The DU sends configuration complete acknowledgment information of the UE to the CU-CP via a UL RRC message transfer message.

This embodiment of this application is applied to a scenario in which UE initially accesses a network in an architecture of a new RAN. The radio access intelligent controller determines, according to the AC policy, whether the UE is allowed to access a target network, so that a centralized control function of a RAN network can be enhanced, interaction between the UE and a plurality of network elements is avoided, and a resource waste is reduced.

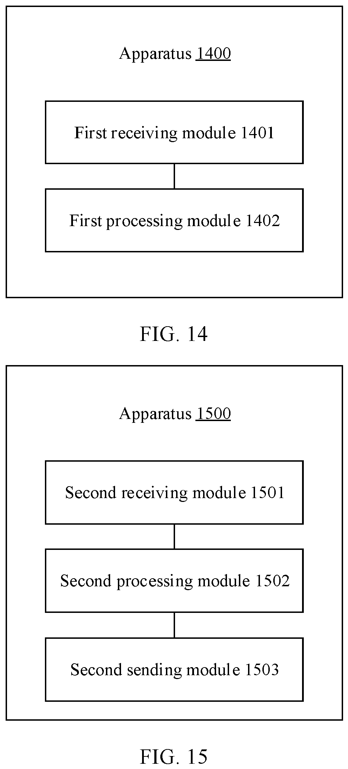

FIG. 14 is a schematic diagram of a mobility management apparatus according to an embodiment of this application. As shown in FIG. 14, the apparatus 1400 includes a first receiving module 1401 and a first processing module 1402. The apparatus 1400 may be configured to implement a function of providing network selection information by the first network device in any one of the foregoing method embodiments. For example, the apparatus 1400 may be a radio access intelligent controller.

The apparatus 1400 may be used as the first network device to process a message, and perform a step of processing a request message of another network device by the first network device in the foregoing method embodiments. The first receiving module 1401 may be configured to support the apparatus 1400 in performing communication, for example, performing a receiving action performed by the first network device in FIG. 5 to FIG. 8. The first processing module 1402 may be configured to support the apparatus 1400 in performing a processing action in the foregoing methods, for example, performing a processing action performed by the first network device in FIG. 5 to FIG. 8. Specifically, refer to the following descriptions.

The first receiving module is configured to receive a first message, where the first message includes information that indicates a target cell. The first processing module is configured to determine, based on at least one of the following information, whether a terminal device is allowed to access the target cell: context information of the terminal device and resource status information of the target cell.

Optionally, the first message includes a measurement report of the terminal device, or the first message includes an identifier of the target cell.

Optionally, the apparatus further includes: a first sending module, configured to send a second message, where the second message is used to initiate a handover procedure to the target cell.

Optionally, when the first message includes the measurement report of the terminal device, the first processing module is further configured to determine the target cell based on the measurement report of the terminal device.

Optionally, the first sending module is specifically configured to send the second message to a second network device, where the second network device is a network device that serves the target cell.

Optionally, the first sending module is further configured to send a third message to a third network device, where the third message includes information about handover of the terminal device to the target cell, the third network device is a network device that serves a source cell, and the source cell is a cell to which the terminal device is connected before the handover procedure occurs.

Optionally, the first sending module is specifically configured to send the second message to a fourth network device, where the fourth network device is a network device that serves a source cell, and the source cell is a cell to which the terminal device is connected before the handover procedure occurs.

Optionally, the first sending module is further configured to send a fourth message, where the fourth message is used to request to obtain the context information of the terminal device, and the first receiving module is further configured to receive the context information of the terminal device.

Optionally, the first receiving module is further configured to receive a fifth message, where the fifth message is used by the apparatus to update the context information of the terminal device.

Optionally, the first processing module is further configured to determine, according to an access control policy, whether the terminal device is allowed to access the target cell.

Optionally, the first receiving module is further configured to receive a sixth message, where the sixth message includes the access control AC policy.

FIG. 15 is a schematic diagram of a mobility management apparatus according to an embodiment of this application. As shown in FIG. 15, the apparatus 1500 includes a second receiving module 1501, a second processing module 1502, and a second sending module 1503. The apparatus 1500 may be configured to implement a function of the second network device in any one of the foregoing method embodiments. For example, the apparatus 1500 may be a radio access intelligent controller.

The apparatus 1500 may be used as the second network device to process a message, and perform a step of processing a measurement report by the second network device in the foregoing method embodiments. The second receiving module 1501 and the second sending module 1503 may be configured to support the apparatus 1500 in performing communication, for example, performing a sending/receiving action performed by the second network device in FIG. 5 to FIG. 8. The second processing module 1502 may be configured to support the apparatus 1500 in performing a processing action in the foregoing methods, for example, performing the processing action performed by the second network device in FIG. 5 to FIG. 8. Specifically, refer to the following descriptions.

The second receiving module is configured to receive a first message, where the first message includes a measurement report of a terminal device. The second processing module is configured to determine, based on the first message, a target cell to be accessed by the terminal device, where the second processing module is further configured to determine that the target cell exceeds a service range of the second network device. The second sending module is configured to send a second message to a first network device, where the second message includes an identifier of the target cell, and a service range of the first network device covers the target cell.

Optionally, the second receiving module is further configured to receive a third message, where the third message includes information about handover of the terminal device to the target cell; and the second sending module is further configured to send a fourth message, where the fourth message includes the information about the handover of the terminal device to the target cell.

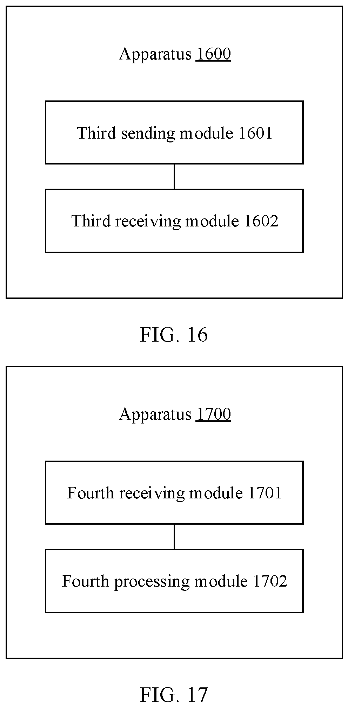

FIG. 16 is a schematic diagram of a mobility management apparatus according to an embodiment of this application. As shown in FIG. 16, the apparatus 1600 includes a third sending module 1601 and a third receiving module 1602. The apparatus 1600 may be configured to implement a function of initiating a handover procedure in any one of the foregoing method embodiments. For example, the apparatus 1600 may be a base station or a network device that serves a cell.

The apparatus 1600 may be used as a third network device to process a message, and perform a step of initiating a handover procedure to a target cell in the foregoing method embodiments. The third sending module 1601 and the third receiving module 1602 may be configured to support the apparatus 1600 in performing communication, for example, performing a sending/receiving action performed by the terminal device in FIG. 5 to FIG. 8. Specifically, refer to the following descriptions.

The third sending module is configured to send a first message, where the first message includes a measurement report of a terminal device. The third receiving module is configured to receive a second message, where the second message includes an identifier of the target cell, and the target cell is a cell to be accessed by the terminal device. The third sending module is further configured to send a third message, where the third message is used to initiate the handover procedure to the target cell.

FIG. 17 is a schematic diagram of a mobility management apparatus according to an embodiment of this application. As shown in FIG. 17, the apparatus 1700 includes a fourth receiving module 1701 and a fourth processing module 1702. The apparatus 1700 may be configured to implement a function of determining whether a terminal device is allowed to access a target cell in any one of the foregoing method embodiments. For example, the apparatus 1700 may be a radio access intelligent controller.

The apparatus 1700 may be used as a fourth network device to process a message, and perform a step of determining whether a terminal device is allowed to access a target cell in the foregoing method embodiments. The fourth receiving module 1701 may be configured to support the apparatus 1600 in performing communication, for example, performing a sending/receiving action performed by the terminal device in FIG. 5 to FIG. 8. The fourth processing module 1702 may be configured to support the apparatus 1700 in performing a processing action in the foregoing methods, for example, performing the processing action performed by the fourth network device in FIG. 5 to FIG. 8. Specifically, refer to the following descriptions.

The fourth receiving module is configured to receive a first message, where the first message includes information that indicates the target cell. The fourth processing module is configured to determine, according to an access control policy, whether the terminal device is allowed to access the target cell.

Optionally, the first message is used to request to obtain context information of the terminal device, and the apparatus further includes: a fourth sending module, configured to send a second message, where the second message includes the context information of the terminal device.

Optionally, the fourth receiving module is further configured to receive a third message, where the third message is used by the apparatus to update the context information of the terminal device.

Optionally, the first message is used to request to access the target cell.

Optionally, the apparatus further includes a fifth sending module, configured to send a fourth message, where the fourth message indicates a network device in the target cell to report an access request to the apparatus when receiving the access request.

Optionally, the fourth sending module or the fifth sending module is further configured to send a fifth message, where the fifth message includes information indicating that the terminal device is allowed to access the target cell.

Optionally, the fourth receiving module is further configured to receive a sixth message, where the sixth message includes the access control AC policy.

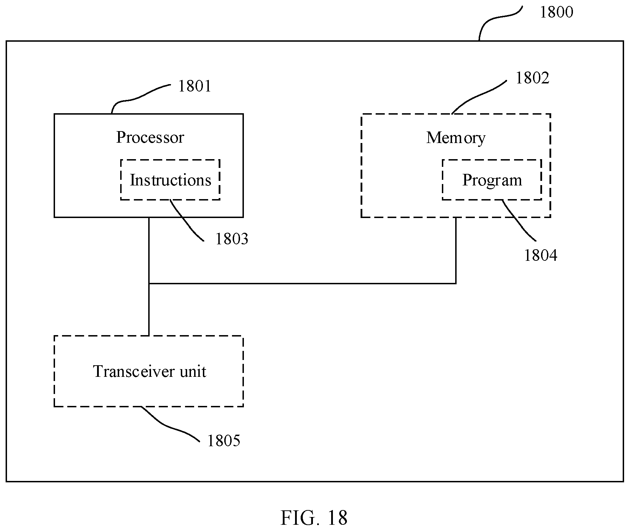

FIG. 18 is a schematic diagram of another structure of a mobility management apparatus according to an embodiment of this application. The communication apparatus 1800 may be configured to implement the methods related to a first network device described in the foregoing method embodiments. The communication apparatus 1800 may be a chip or a network device.

The communication apparatus 1800 includes one or more processors 1801. The one or more processors 1801 may support the communication apparatus 1800 in implementing the mobility management methods in FIG. 5 to FIG. 8. The processor 1801 may be a general-purpose processor or a dedicated processor. For example, the processor 1801 may be a central processing unit (central processing unit, CPU) or a baseband processor. The baseband processor may be configured to process communication data. The CPU may be configured to control the communication apparatus (for example, the network device, a terminal device, or the chip) to execute a software program and process data of the software program. The communication apparatus 1800 may further include a transceiver unit 1805, configured to input (receive) and output (send) a signal.

For example, the communication apparatus 1800 may be the chip, and the transceiver unit 1805 may be an input and/or output circuit of the chip. Alternatively, the transceiver unit 1805 may be a communication interface of the chip. The chip may be used as a component of the terminal device, the network device, or another wireless communication device.

The communication apparatus 1800 may include one or more memories 1802. The memory 1802 stores a program 1804. The program 1804 may be run by the processor 1801 to generate instructions 1803, to enable the processor 1801 to perform, based on the instructions 1803, the methods described in the foregoing method embodiments. Optionally, the memory 1802 may further store data. Optionally, the processor 1801 may further read the data stored in the memory 1802. The data and the program 1804 may be stored at a same storage address, or the data and the program 1804 may be stored at different storage addresses.

The processor 1801 and the memory 1802 may be separately disposed, or may be integrated together, for example, integrated on a single board or a system-on-a-chip (system-on-a-chip, SoC).

The communication apparatus 1800 may further include the transceiver unit 1805. The transceiver unit 1805 may be referred to as a transceiver machine, a transceiver circuit, or a transceiver.

It should be understood that the steps in the foregoing method embodiments may be completed by using a logic circuit in a form of hardware or instructions in a form of software in the processor 1801. The processor 1801 may be a CPU, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, or a discrete hardware component.

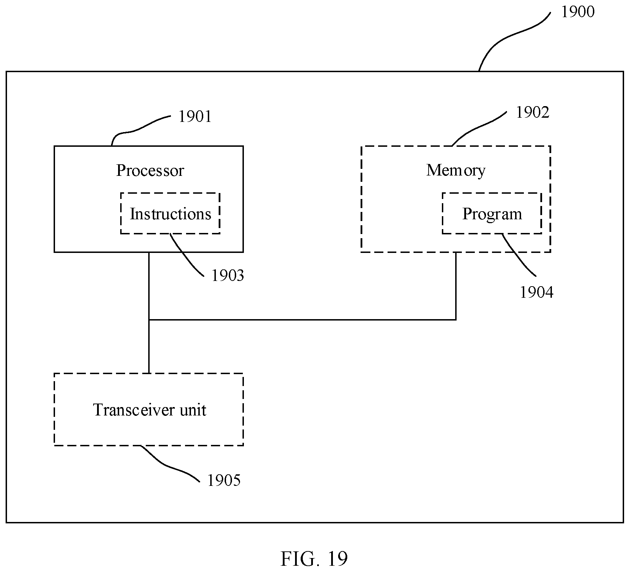

FIG. 19 is a schematic diagram of another structure of a mobility management apparatus according to an embodiment of this application. The communication apparatus 1900 may be configured to implement the methods related to a first network device described in the foregoing method embodiments. The communication apparatus 1900 may be a chip or a network device.

The communication apparatus 1900 includes one or more processors 1901. The one or more processors 1901 may support the communication apparatus 1900 in implementing the mobility management methods in FIG. 5 to FIG. 8. The processor 1901 may be a general-purpose processor or a dedicated processor. For example, the processor 1901 may be a central processing unit (central processing unit, CPU) or a baseband processor. The baseband processor may be configured to process communication data. The CPU may be configured to control the communication apparatus (for example, the network device, a terminal device, or the chip) to execute a software program and process data of the software program. The communication apparatus 1900 may further include a transceiver unit 1905, configured to input (receive) and output (send) a signal.

For example, the communication apparatus 1900 may be the chip, and the transceiver unit 1905 may be an input and/or output circuit of the chip. Alternatively, the transceiver unit 1905 may be a communication interface of the chip. The chip may be used as a component of the terminal device, the network device, or another wireless communication device.

The communication apparatus 1900 may include one or more memories 1902. The memory 1902 stores a program 1904. The program 1904 may be run by the processor 1901 to generate instructions 1903, to enable the processor 1901 to perform, based on the instructions 1903, the methods described in the foregoing method embodiments. Optionally, the memory 1902 may further store data. Optionally, the processor 1901 may further read the data stored in the memory 1902. The data and the program 1904 may be stored at a same storage address, or the data and the program 1904 may be stored at different storage addresses.

The processor 1901 and the memory 1902 may be separately disposed, or may be integrated together, for example, integrated on a single board or a system-on-a-chip (system-on-a-chip, SoC).

The communication apparatus 1900 may further include a transceiver unit 1905. The transceiver unit 1905 may be referred to as a transceiver machine, a transceiver circuit, or a transceiver.

It should be understood that the steps in the foregoing method embodiments may be completed by using a logic circuit in a form of hardware or instructions in a form of software in the processor 1901. The processor 1901 may be a CPU, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, or a discrete hardware component.

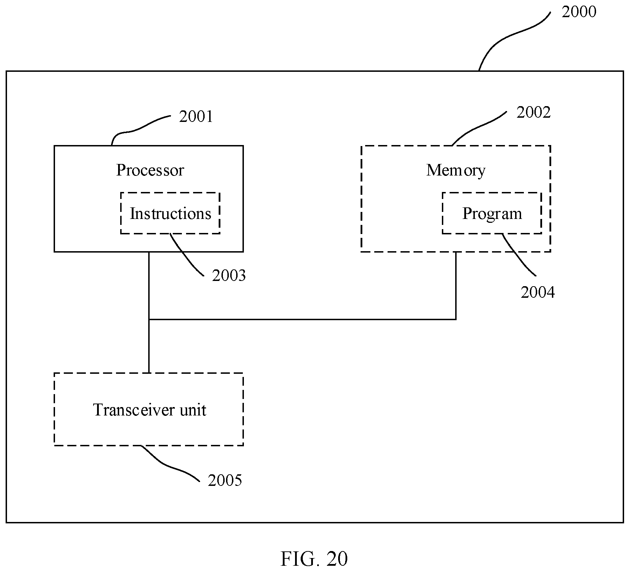

FIG. 20 is a schematic diagram of another structure of a mobility management apparatus according to an embodiment of this application. The communication apparatus 2000 may be configured to implement the methods related to a first network device described in the foregoing method embodiments. The communication apparatus 2000 may be a chip or a network device.

The communication apparatus 2000 includes one or more processors 2001. The one or more processors 2001 may support the communication apparatus 2000 in implementing the mobility management methods in FIG. 5 to FIG. 8. The processor 2001 may be a general-purpose processor or a dedicated processor. For example, the processor 2001 may be a central processing unit (central processing unit, CPU) or a baseband processor. The baseband processor may be configured to process communication data. The CPU may be configured to control the communication apparatus (for example, the network device, a terminal device, or the chip) to execute a software program and process data of the software program. The communication apparatus 2000 may further include a transceiver unit 2005, configured to input (receive) and output (send) a signal.

For example, the communication apparatus 2000 may be the chip, and the transceiver unit 2005 may be an input and/or output circuit of the chip. Alternatively, the transceiver unit 2005 may be a communication interface of the chip. The chip may be used as a component of the terminal device, the network device, or another wireless communication device.

The communication apparatus 2000 may include one or more memories 2002. The memory 2002 stores a program 2004. The program 2004 may be run by the processor 2001 to generate instructions 2003, to enable the processor 2001 to perform, based on the instructions 2003, the methods described in the foregoing method embodiments. Optionally, the memory 2002 may further store data. Optionally, the processor 2001 may further read the data stored in the memory 2002. The data and the program 2004 may be stored at a same storage address, or the data and the program 2004 may be stored at different storage addresses.

The processor 2001 and the memory 2002 may be separately disposed, or may be integrated together, for example, integrated on a single board or a system-on-a-chip (system-on-a-chip, SoC).

The communication apparatus 2000 may further include a transceiver unit 2005. The transceiver unit 2005 may be referred to as a transceiver machine, a transceiver circuit, or a transceiver.

It should be understood that the steps in the foregoing method embodiments may be completed by using a logic circuit in a form of hardware or instructions in a form of software in the processor 2001. The processor 2001 may be a CPU, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, or a discrete hardware component.

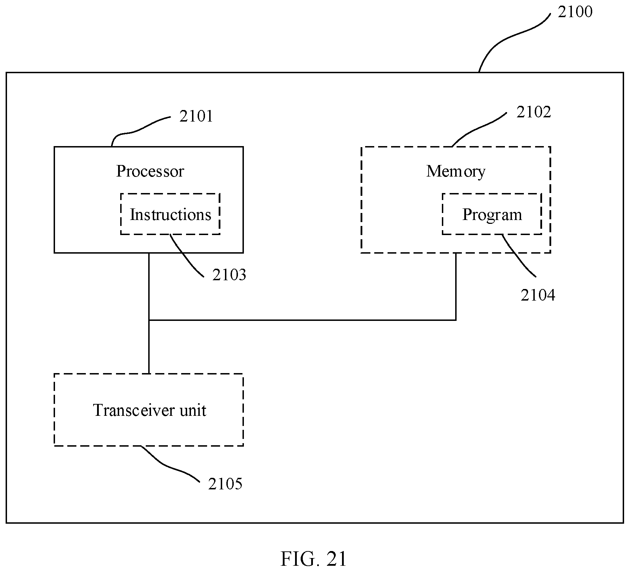

FIG. 21 is a schematic diagram of another structure of a mobility management apparatus according to an embodiment of this application. The communication apparatus 2100 may be configured to implement the methods related to a first network device described in the foregoing method embodiments. The communication apparatus 2100 may be a chip or a network device.

The communication apparatus 2100 includes one or more processors 2101. The one or more processors 2101 may support the communication apparatus 2100 in implementing the mobility management methods in FIG. 5 to FIG. 8. The processor 2101 may be a general-purpose processor or a dedicated processor. For example, the processor 2101 may be a central processing unit (central processing unit, CPU) or a baseband processor. The baseband processor may be configured to process communication data. The CPU may be configured to control the communication apparatus (for example, the network device, a terminal device, or the chip) to execute a software program and process data of the software program. The communication apparatus 2100 may further include a transceiver unit 2105, configured to input (receive) and output (send) a signal.

For example, the communication apparatus 2100 may be the chip, and the transceiver unit 2105 may be an input and/or output circuit of the chip. Alternatively, the transceiver unit 2105 may be a communication interface of the chip. The chip may be used as a component of the terminal device, the network device, or another wireless communication device.

The communication apparatus 2100 may include one or more memories 2102. The memory 2102 stores a program 2104. The program 2104 may be run by the processor 2101 to generate instructions 2103, to enable the processor 2101 to perform, based on the instructions 2103, the methods described in the foregoing method embodiments. Optionally, the memory 2102 may further store data. Optionally, the processor 2101 may further read the data stored in the memory 2102. The data and the program 2104 may be stored at a same storage address, or the data and the program 2104 may be stored at different storage addresses.

The processor 2101 and the memory 2102 may be separately disposed, or may be integrated together, for example, integrated on a single board or a system-on-a-chip (system-on-a-chip, SoC).

The communication apparatus 2100 may further include a transceiver unit 2105. The transceiver unit 2105 may be referred to as a transceiver machine, a transceiver circuit, or a transceiver.

It should be understood that the steps in the foregoing method embodiments may be completed by using a logic circuit in a form of hardware or instructions in a form of software in the processor 2101. The processor 2101 may be a CPU, a digital signal processor (digital signal processor, DSP), an application-specific integrated circuit (application-specific integrated circuit, ASIC), a field programmable gate array (field programmable gate array, FPGA) or another programmable logic device, a discrete gate, a transistor logic device, or a discrete hardware component.

In the several embodiments provided in this application, it should be understood that the disclosed apparatuses and methods may be implemented in other manners. For example, the foregoing described apparatus embodiments are merely examples. For example, division into modules is merely logical function division and there may be other division during actual implementation.

When a method in embodiments of this application is implemented in a form of a software functional unit and sold or used as an independent product, the method may be stored in a computer-readable storage medium. Based on such an understanding, the technical solutions of this application or a part of the technical solutions may be implemented in a form of a software product. The computer software product is stored in a storage medium, and includes several instructions for indicating a computer device (which may be a personal computer, a server, a network device, or the like) to perform all or a part of the steps of the methods described in embodiments of this application. The storage medium includes at least any medium, for example, a USB flash drive, a removable hard disk, a read-only memory (read-only memory, ROM), a random access memory (random access memory, RAM), a magnetic disk, an optical disc, or the like that can store program code. The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A mobility management method, wherein the method comprises:
receiving, by a first network device, a first message, wherein the first message comprises information that indicates a target cell; and
determining, by the first network device based on at least one of the following information, whether a terminal device is allowed to access the target cell:
context information of the terminal device and resource status information of the target cell.

2. The method according to claim 1, wherein the first message comprises a measurement report of the terminal device, or
the first message comprises an identifier of the target cell.

3. The method according to claim 1 or 2, wherein the method further comprises:
sending, by the first network device, a second message, wherein the second message is used to initiate a handover procedure to the target cell.

4. The method according to claim 2 or 3, wherein when the first message comprises the measurement report of the terminal device, the method further comprises:
determining, by the first network device, the target cell based on the measurement report of the terminal device.

5. The method according to claim 3, wherein the sending, by the first network device, a second message, wherein the second message is used to initiate a handover procedure to the target cell comprises:
sending, by the first network device, the second message to a second network device, wherein the second network device is a network device that serves the target cell.

6. The method according to claim 5, wherein the method further comprises:
sending, by the first network device, a third message to a third network device, wherein the third message comprises information about handover of the terminal device to the target cell, the third network device is a network device that serves a source cell, and the source cell is a cell to which the terminal device is connected before the handover procedure occurs.

7. The method according to claim 3, wherein the sending, by the first network device, a second message, wherein the second message is used to initiate a handover procedure to the target cell comprises:
sending, by the first network device, the second message to a fourth network device, wherein the fourth network device is a network device that serves a source cell, and the source cell is a cell to which the terminal device is connected before the handover procedure occurs.

8. The method according to any one of claims 1 to 7, wherein the method further comprises:
sending, by the first network device, a fourth message, wherein the fourth message is used to request to obtain the context information of the terminal device; and
receiving, by the first network device, the context information of the terminal device.

9. The method according to any one of claims 1 to 8, wherein the method further comprises:
receiving, by the first network device, a fifth message, wherein the fifth message is used by the first network device to update the context information of the terminal device.

10. The method according to any one of claims 1 to 9, wherein the determining, by the first network device based on at least one of the following information, whether a terminal device is allowed to access the target cell further comprises:
determining, by the first network device according to an access control policy, whether the terminal device is allowed to access the target cell.

11. The method according to any one of claims 1 to 10, wherein the method further comprises:
receiving, by the first network device, a sixth message, wherein the sixth message comprises the access control AC policy.

12. A mobility management method, comprising:
receiving, by a second network device, a first message, wherein the first message comprises a measurement report of a terminal device;
determining, by the second network device based on the first message, a target cell to be accessed by the terminal device;
determining, by the second network device, that the target cell exceeds a service range of the second network device; and
sending, by the second network device, a second message to a first network device, wherein the second message comprises an identifier of the target cell, and a service range of the first network device covers the target cell.

13. The method according to claim 12, wherein the method further comprises:
receiving, by the second network device, a third message, wherein the third message comprises information about handover of the terminal device to the target cell; and
sending, by the second network device, a fourth message, wherein the fourth message comprises the information about the handover of the terminal device to the target cell.

14. A mobility management method, comprising:
sending, by a third network device, a first message, wherein the first message comprises a measurement report of a terminal device;
receiving, by the third network device, a second message, wherein the second message comprises an identifier of a target cell, and the target cell is a cell to be accessed by the terminal device; and
sending, by the third network device, a third message, wherein the third message is used to initiate a handover procedure to the target cell.

15. A mobility management apparatus, wherein the apparatus comprises:
a first receiving module, configured to receive a first message, wherein the first message comprises information that indicates a target cell; and
a first processing module, configured to determine, based on at least one of the following information, whether a terminal device is allowed to access the target cell:
context information of the terminal device and resource status information of the target cell.

16. The apparatus according to claim 15, wherein the first message comprises a measurement report of the terminal device, or
the first message comprises an identifier of the target cell.

17. The apparatus according to claim 15 or 16, wherein the apparatus further comprises:
a first sending module, configured to send a second message, wherein the second message is used to initiate a handover procedure to the target cell.

18. The apparatus according to claim 16 or 17, wherein when the first message comprises the measurement report of the terminal device, the first processing module is further configured to:
determine the target cell based on the measurement report of the terminal device.

19. The apparatus according to claim 17, wherein the first sending module is specifically configured to:
send the second message to a second network device, wherein the second network device is a network device that serves the target cell.

20. The apparatus according to claim 19, wherein the first sending module is further configured to:
send a third message to a third network device, wherein the third message comprises information about handover of the terminal device to the target cell, the third network device is a network device that serves a source cell, and the source cell is a cell to which the terminal device is connected before the handover procedure occurs.

21. The apparatus according to claim 17, wherein the first sending module is specifically configured to:
send the second message to a fourth network device, wherein the fourth network device is a network device that serves a source cell, and the source cell is a cell to which the terminal device is connected before the handover procedure occurs.

22. The apparatus according to any one of claims 15 to 21, wherein the first sending module is further configured to:
send a fourth message, wherein the fourth message is used to request to obtain the context information of the terminal device; and
the first receiving module is further configured to receive the context information of the terminal device.

23. The apparatus according to any one of claims 15 to 22, wherein the first receiving module is further configured to:
receive a fifth message, wherein the fifth message is used by the apparatus to update the context information of the terminal device.

24. The apparatus according to any one of claims 15 to 23, wherein the first processing module is further configured to:
determine, according to an access control policy, whether the terminal device is allowed to access the target cell.

25. The apparatus according to any one of claims 15 to 24, wherein the first receiving module is further configured to:
receive a sixth message, wherein the sixth message comprises the access control AC policy.

26. A mobility management apparatus, wherein the apparatus comprises:
a second receiving module, configured to receive a first message, wherein the first message comprises a measurement report of a terminal device;
a second processing module, configured to determine, based on the first message, a target cell to be accessed by the terminal device, wherein
the second processing module is further configured to determine that the target cell exceeds a service range of a second network device; and
a second sending module, configured to send a second message to a first network device, wherein the second message comprises an identifier of the target cell, and a service range of the first network device covers the target cell.

27. The apparatus according to claim 26, wherein the second receiving module is further configured to:
receive a third message, wherein the third message comprises information about handover of the terminal device to the target cell; and
the second sending module is further configured to:
send a fourth message, wherein the fourth message comprises the information about the handover of the terminal device to the target cell.

28. A mobility management apparatus, wherein the apparatus comprises:
a third sending module, configured to send a first message, wherein the first message comprises a measurement report of a terminal device; and
a third receiving module, configured to receive a second message, wherein the second message comprises an identifier of a target cell, and the target cell is a cell to be accessed by the terminal device, wherein
the third sending module is further configured to send a third message, wherein the third message is used to initiate a handover procedure to the target cell.

29. A computer-readable storage medium, wherein the computer-readable storage medium is configured to store a computer program executed by a device, and the computer program comprises program instructions used to perform the method according to any one of claims 1 to 14.

30. A chip, wherein the chip comprises a processor and a data interface, and the processor reads, through the data interface, program instructions stored in a memory, to perform the method according to any one of claims 1 to 14.
